(19) Europäisches Patentamt
European Patent Office
Office européen des brevets

(11) **EP 3 960 417 B1**

(12) **EUROPEAN PATENT SPECIFICATION**

(45) Date of publication and mention of the grant of the patent:
**13.03.2024 Bulletin 2024/11**

(21) Application number: **20795689.7**

(22) Date of filing: **13.03.2020**

(51) International Patent Classification (IPC):
***B29C 45/14*** $^{(2006.01)}$ ***B32B 27/30*** $^{(2006.01)}$
***B60J 1/00*** $^{(2006.01)}$ ***G01N 24/08*** $^{(2006.01)}$
***B29C 45/00*** $^{(2006.01)}$ ***B29K 33/00*** $^{(2006.01)}$
***B32B 7/022*** $^{(2019.01)}$ ***B32B 27/40*** $^{(2006.01)}$
***B32B 27/08*** $^{(2006.01)}$

(52) Cooperative Patent Classification (CPC):
**B29C 45/14811; B29C 45/0001; B32B 7/022; B32B 27/08; B32B 27/30; B32B 27/306; B32B 27/308; B32B 27/40;** B29K 2033/12; B29K 2995/0012; B32B 2250/03; B32B 2250/04; B32B 2250/24; B32B 2305/70; B32B 2307/30;

(Cont.)

(86) International application number:
**PCT/JP2020/011137**

(87) International publication number:
**WO 2020/217767 (29.10.2020 Gazette 2020/44)**

(54) **LAMINATE AND MANUFACTURING METHOD OF A LAMINATE**

SCHICHTVERBUNDWERKSTOFF UND HERSTELLUNGSVERFAHREN EINES SCHICHTVERBUNDWERKSTOFFS

STRATIFIÉ ET PROCEDE DE FABRICATION D'UN STRATIFIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.04.2019 JP 2019082156**

(43) Date of publication of application:
**02.03.2022 Bulletin 2022/09**

(73) Proprietor: **SUMITOMO CHEMICAL COMPANY, LIMITED**
**Chuo-ku,**
**Tokyo 104-8260 (JP)**

(72) Inventors:
- **SUMIDA, Masakazu**
  **Ehime 792-8521 (JP)**
- **KONISHI, Shota**
  **Ehime 792-8521 (JP)**

(74) Representative: **Winter, Brandl - Partnerschaft mbB**
**Alois-Steinecker-Straße 22**
**85354 Freising (DE)**

(56) References cited:
**WO-A1-2017/208882**
**JP-A- H04 339 646**
**JP-A- 2009 541 099**
**JP-A- 2017 020 032**
**JP-A- 2017 114 029**
**JP-A- 2019 042 930**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
B32B 2307/412; B32B 2307/558; B32B 2307/732;
B32B 2605/006; G01N 24/08

## Description

TECHNICAL FIELD

The present invention relates to a laminate, and more particularly, to a transparent resin laminate and a manufacturing method of the same.

BACKGROUND ART

A vehicle such as an automobile or a railway vehicle has a glass window material. On the other hand, in particular, in a vehicle, weight reduction is strongly required to improve fuel consumption. Therefore, attempts have been made to develop a vehicle window material using a resin having a specific gravity smaller than that of glass as a base material.

For example, in a vehicle window material, it is important to provide physical strength such as impact resistance while maintaining transparency in an actual use environment. However, in general, when a resin having high transparency is used for a resin window material, there is a technical problem in that performance such as impact resistance tends to be insufficient as compared to a glass window material.

For example, JP-A-2003-201409 (Patent Document 1) describes a resin composition obtained by dispersing an oxide compound (B) which has a hydroxyl group on a surface thereof and is partially hydrophobized in a copolymer (A) of an unsaturated monomer (a) having a functional group capable of hydrogen bonding with a hydroxyl group and another monomer (b) copolymerizable with the unsaturated monomer (a) (claim 1). Here, an unsaturated monomer having a functional group capable of hydrogen bonding with a silanol group is described as the unsaturated monomer (a), a silica compound which has a silanol group on a surface thereof and is partially hydrophobized is described as the oxide compound (B), and a methacrylic monomer and/or an acrylic monomer is described as the another monomer (b) (claims 2 and 3). Further, it is described that improvement in impact resistance and rigidity can be realized by the above resin composition without affecting transparency or impact strength (for example, paragraph

**[0005]** ). WO2017/208882 (Patent Document 2) discloses protective film usable as a window sheet for a touch screen, having at least a film substrate on both surfaces of a resin laminate having at least an intermediate layer (A) and thermoplastic resin layers (B) and (C) present on both sides of the intermediate layer (A). The intermediate layer (A) is contained in an amount of 10 to 90% by mass, based on the total resin contained in the intermediate layer (A) by weight of a (meth) acrylic resin and 90 to 10% by weight of a vinylidene fluoride resin. The average value of the film thickness of the resin laminate is 100 to 2000 um, and the average value of the thickness of the thermoplastic resin layers (B) and (C) is 10 to 200 um respectively A resin laminate with a protective film as described.The thermoplastic resin contained in the thermoplastic resin layers (B) and (C) has a Vicat softening temperature of 100 to 160°C, preferably 102-155°C.The thermoplastic resin layers (B) and (C) contain 500 by mass or more of (meth) acrylic resin based on the total resin contained in the respective thermoplastic resin layers.

PRIOR ART DOCUMENT

PATENT DOCUMENT

Patent Document 1: JP-A-2003-201409

Patent Document 2: WO2017/208882

SUMMARY OF THE INVENTION

PROBLEMS TO BE SOLVED BY THE INVENTION

In the invention of Patent Document 1, the impact resistance and the rigidity are improved by blending the oxide compound (B) such as a silica compound. However, since physical performance such as impact resistance required in, for example, a plastic base material for an automobile glazing is significantly high, means for improving impact resistance is also required. There is also a need for means for controlling shapes of fragments scattered by an impact.

The present invention is intended to solve the problems of the related art, and an object of the present invention is to provide an acrylic resin layer laminate having excellent impact resistance and smaller fragments generated at the time of impact.

MEANS FOR SOLVING THE PROBLEMS

In order to solve the problems, the present invention provides the following aspects.

[1] A laminate including a first acrylic resin layer, a thermoplastic resin layer, and a second acrylic resin layer in this order,

in which a ratio [$T_1$:$T_2$] of a thickness $T_1$ of the first acrylic resin layer to a thickness $T_2$ of the second acrylic resin layer is within a range of 1:1.9 to 1:29, and
the second acrylic resin layer is formed of a (meth)acrylic resin having a Vicat softening temperature of 115°C or higher and 145°C or lower.

[2] The laminate, in which the (meth)acrylic resin having a Vicat softening temperature of 115°C or higher and 145°C or lower is
a copolymer (A) having a ring structural unit (a1) having a 5- or 6-membered ring structure and a monomer unit (a2) other than the ring structural unit.
[3] The laminate, in which the ring structural unit (a1) having a 5- or 6-membered ring structure is one or more selected from the group consisting of a glutaric anhydride structural unit, a maleic anhydride structural unit, a maleimide structural unit, a glutarimide structural unit, and a lactone structural unit.
[4] The laminate, in which the thermoplastic resin layer contains 71% or more of a component having a spin-spin relaxation time $T_2^H$ in pulse NMR measurement of 0.03 ms or longer.
[5] The laminate further including a third acrylic resin layer,
in which the third acrylic resin layer is provided between the second acrylic resin layer and the thermoplastic resin layer.
[6] The laminate, in which the first acrylic resin layer is formed of a (meth)acrylic resin having a Vicat softening temperature of 115°C or higher and 145°C or lower.
[7] The laminate, in which a ratio [$T_1$:($T_2$ + $T_3$)] of a thickness $T_1$ of the first acrylic resin layer to the sum of a thickness $T_2$ of the second acrylic resin layer and a thickness $T_3$ of the third acrylic resin layer is within a range of $T_1$:($T_2$ + $T_3$) = 1:2 to 1:30.
[8] The laminate, in which a thermoplastic resin constituting the thermoplastic resin layer is one or more selected from the group consisting of a polyurethane resin, a polyvinyl acetal resin, an ethylene-methyl methacrylate copolymer resin, and an ethylene-vinyl acetate copolymer resin.
[9] A manufacturing method of a laminate including a first acrylic resin layer, a thermoplastic resin layer, a third acrylic resin layer, and a second acrylic resin layer in this order, the method including:

disposing a laminate for an injection molding including the first acrylic resin layer, the thermoplastic resin layer, and the third acrylic resin layer in this order in a mold; and
molding a second acrylic resin layer by injecting a resin composition (2) containing a (meth)acrylic resin on the third acrylic resin layer of the laminate for an injection molding disposed in the mold,
in which the (meth)acrylic resin has a Vicat softening temperature of 115°C or higher and 145°C or lower.

[10] A manufacturing method of a laminate including a first acrylic resin layer formed of a resin composition (1) containing a (meth)acrylic resin, a thermoplastic resin layer formed of a resin composition containing a thermoplastic resin, and a second acrylic resin layer formed of a resin composition (2) containing a (meth)acrylic resin in this order, the method including:

discharging, from a die, a molten resin laminate containing at least a melt of the resin composition (1) containing the (meth)acrylic resin, a melt of the resin composition containing the thermoplastic resin, and a melt of the resin composition (2) containing the (meth)acrylic resin; and
cooling the discharged molten resin laminate to obtain a laminate,
in which the (meth)acrylic resin contained in the resin composition (2) has a Vicat softening temperature of 115°C or higher and 145°C or lower.

[11] The manufacturing method,
in which the thermoplastic resin layer contains 71% or more of a component having a spin-spin relaxation time $T_2^H$ in pulse NMR measurement of 0.03 ms or longer.

## EFFECT OF THE INVENTION

The resin laminate has an advantage that impact resistance, in particular, impact resistance under a low-temperature condition is excellent. The resin laminate has an advantage that it can be appropriately used as, for example, a resin glazing material.

## BRIEF DESCRIPTION OF THE DRAWINGS

Fig. 1 is a schematic explanatory view of a laminate including a first acrylic resin layer, a thermoplastic resin layer, and a second acrylic resin layer.
Fig. 2 is a schematic explanatory view of a laminate including a first acrylic resin layer, a thermoplastic resin layer, a third acrylic resin layer, and a second acrylic resin layer.

## MODE FOR CARRYING OUT THE INVENTION

First, a background leading to the present invention will be described. In the present invention, experiments and studies were conducted for the purpose of using an acrylic resin having excellent transparency, relatively high hardness, and excellent weather resistance, for example, as a resin glazing material. The acrylic resin has excellent transparency, hardness, weather resistance, and the like. On the other hand, the acrylic resin has a technical problem in that it tends to be easily broken as compared to, for example, a tough resin, and peripheral equipment and/or a human body may be damaged by broken and scattered fragments directly hitting the peripheral equipment and/or the human body.

The present inventors have conducted intensive studies to solve the technical problem. As a result, the present inventors have found through experiments that the technical problem can be solved by using a thermoplastic resin together with an acrylic resin and by laminating a first acrylic resin layer, a thermoplastic resin layer, and a second acrylic resin layer in this order, setting a ratio of a thickness $T_1$ of the first acrylic resin layer to a thickness $T_2$ of the second acrylic resin layer to be in a specific range, and using a (meth)acrylic resin excellent in heat resistance in the second acrylic resin layer, thereby completing the present invention.

The laminate includes a first acrylic resin layer, a thermoplastic resin layer, and a second acrylic resin layer in this order. In addition, in the laminate, a ratio $[T_1:T_2]$ of the thickness $T_1$ of the first acrylic resin layer to the thickness $T_2$ of the second acrylic resin layer is within a range of 1:1.9 to 1:29, and the second acrylic resin layer is formed of a (meth)acrylic resin having a Vicat softening temperature of 115°C or higher and 145°C or lower. Hereinafter, the respective resin layers will be described.

### First Acrylic Resin Layer

The first acrylic resin layer is a resin layer containing a (meth)acrylic resin. Examples of the (meth)acrylic resin can include a homopolymer of a (meth)acrylic monomer such as (meth)acrylic acid ester, a copolymer of two or more (meth)acrylic monomers, and a copolymer of a (meth)acrylic monomer and a monomer other than the (meth)acrylic monomer. In the present specification, the term "(meth)acryl" means "acryl" or "methacryl".

The (meth)acrylic resin is preferably a methacrylic resin from the viewpoint of easily enhancing hardness, weather resistance, and transparency of the resin laminate. In the present specification, the methacrylic resin is a polymer having a structural unit derived from a monomer having a methacrylic group.

Examples of the methacrylic resin can include a methacrylic homopolymer having only a structural unit derived from alkyl methacrylate having an alkyl group having 1 to 4 carbon atoms, and a methacrylic copolymer having 80% by mass or more and less than 100% by mass of a structural unit derived from alkyl methacrylate having an alkyl group having 1 to 4 carbon atoms and having more than 0% by mass and 20% by mass or less of a structural unit derived from another vinyl monomer copolymerizable with a structural unit derived from methacrylic acid ester having an alkyl group having 1 to 4 carbon atoms.

The "alkyl methacrylate having an alkyl group having 1 to 4 carbon atoms" is a compound represented by $CH_2 = CH(CH_3)COOR$ (R is an alkyl group having 1 to 4 carbon atoms) .

The vinyl monomer copolymerizable with methacrylic acid ester having an alkyl group having 1 to 4 carbon atoms is copolymerizable with methacrylic acid ester having an alkyl group having 1 to 4 carbon atoms, and is a monomer having a vinyl group.

Specific examples of the alkyl methacrylate having an alkyl group having 1 to 4 carbon atoms can include methyl methacrylate, ethyl methacrylate, n-propyl methacrylate, isopropyl methacrylate, n-butyl methacrylate, tert-butyl

methacrylate, sec-butyl methacrylate, and isobutyl methacrylate. Among them, methyl methacrylate is particularly preferred. The alkyl methacrylates may be used alone or as a mixture of two or more thereof.

Examples of the vinyl monomer copolymerizable with methacrylic acid ester having an alkyl group having 1 to 4 carbon atoms can include methacrylic acid ester (excluding alkyl methacrylate having an alkyl group having 1 to 4 carbon atoms) such as cyclohexyl methacrylate, benzyl methacrylate, 2-ethylhexyl methacrylate, 2-hydroxyethyl methacrylate, hydroxypropyl methacrylate, or monoglycerol methacrylate; acrylic acid ester such as methyl acrylate, ethyl acrylate, propyl acrylate, butyl acrylate, 2-ethylhexyl acrylate, 2-hydroxyethyl acrylate, 2-hydroxypropyl acrylate, or monoglycerol acrylate; unsaturated carboxylic acid or an acid anhydride thereof such as acrylic acid, methacrylic acid, maleic acid, itaconic acid, maleic anhydride, or itaconic anhydride; a nitrogen-containing monomer such as acrylamide, methacrylamide, acrylonitrile, methacrylonitrile, diacetone acrylamide, or dimethylaminoethyl methacrylate; an epoxy group-containing monomer such as allyl glycidyl ether, glycidyl acrylate, or glycidyl methacrylate; and a styrene-based monomer such as styrene or $\alpha$-methylstyrene.

Among them, cyclohexyl methacrylate, methyl acrylate, ethyl acrylate, acrylic acid, methacrylic acid, maleic anhydride, or styrene is preferred.

As the methacrylic resin, a methacrylic homopolymer having only a structural unit derived from methyl methacrylate, or a methacrylic copolymer having 80% by mass or more and less than 100% by mass of a structural unit derived from methyl methacrylate and more than 0% by mass and 20% by mass or less of a structural unit derived from another vinyl monomer copolymerizable with a structural unit derived from methyl methacrylate is preferred from the viewpoint of easily enhancing weather resistance and transparency of the resin laminate.

The (meth)acrylic resin contained in the first acrylic resin layer may be formed of a (meth)acrylic resin having a Vicat softening temperature of 100°C or higher and lower than 115°C from the viewpoint of excellent heat resistance.

An example of a method of producing the methacrylic resin can include a method of polymerizing methacrylic acid ester having an alkyl group having 1 to 4 carbon atoms, and if necessary, a vinyl monomer copolymerizable with methacrylic acid ester having an alkyl group having 1 to 4 carbon atoms, by a method such as bulk polymerization, solution polymerization, suspension polymerization, or emulsion polymerization.

The first acrylic resin layer may be formed of a (meth)acrylic resin which constitutes the second acrylic resin layer and has a Vicat softening temperature of 115°C or higher and 145°C or lower described in detail below.

A melt mass flow rate (hereinafter, may be referred to as an MFR) of the (meth)acrylic resin contained in the first acrylic resin layer when measured at a load of 3.80 kg and 230°C is preferably 0.1 to 20 g/10 min, more preferably 0.2 to 10 g/10 min, and still more preferably 0.5 to 5 g/10 min. When the MFR is equal to or less than the above upper limit, there are advantages that strength of the obtained resin layer is excellent and the resin layer is easily formed. The MFR can be measured in accordance with a method specified in JIS K 7210:2014 "Test Methods for Melt Mass Flow Rate (MFR) and Melt Volume Flow Rate (MVR) of Plastic-Thermoplastic". An MFR of a poly(methyl methacrylate)-based material is measured at a temperature of 230°C and a load of 3.80 kg (37.3 N) and is specified by the above JIS.

A weight average molecular weight (hereinafter, may be referred to as an Mw) of the (meth)acrylic resin contained in the first acrylic resin layer is preferably 50,000 to 300,000. When the Mw is within the above range, there is an advantage that excellent transparency, weather resistance, mechanical strength, and the like can be obtained. The Mw is preferably 70,000 or more and more preferably 100,000 or more. In addition, the Mw is preferably 250,000 or less and more preferably 200,000 or less. The weight average molecular weight is measured by gel permeation chromatography (GPC) measurement.

The first acrylic resin layer may further contain another resin different from the (meth)acrylic resin, if necessary. In a case where another resin is contained, the type thereof is not particularly limited as long as the transparency of the resin laminate is not significantly impaired. The amount of another resin is preferably 20% by mass or less, more preferably 10% by mass or less, and still more preferably 5% by mass or less, based on the total resin contained in the first acrylic resin layer, from the viewpoint of hardness and weather resistance of the resin laminate. Examples of the another resin can include a polycarbonate resin, a polyamide resin, an acrylonitrile-styrene copolymer, a methyl methacrylate-styrene copolymer, and polyethylene terephthalate. The first acrylic resin layer may further contain another resin, but from the viewpoint of transparency or the like, the amount of another resin is preferably 20% by mass or less, and the resin contained in the first acrylic resin layer is more preferably only a (meth)acrylic resin.

The first acrylic resin layer may also further contain various generally used additives as long as the effect of the present invention is not impaired. Examples of the additive can include crosslinked rubber particles, an ultraviolet absorber, a slipping agent, an antioxidant, a mold release agent, and an antistatic agent.

Examples of the crosslinked rubber particle can include a multilayer rubber particle which has at least a core part and a coating layer covering the core part, in which at least one of the core part and the coating layer is formed of a material having a structural unit derived from a polyfunctional monomer having two or more carbon-carbon unsaturated bonds.

Examples of the ultraviolet absorber can include a benzophenone-based ultraviolet absorber, a cyanoacrylate-based ultraviolet absorber, a benzotriazole-based ultraviolet absorber, a malonic acid ester-based ultraviolet absorber,

and an oxalanilide-based ultraviolet absorber.

Examples of the slipping agent can include silicone oil and a polysiloxane-based compound. Examples of the antioxidant can include a phenol-based antioxidant, a sulfur-based antioxidant, and a phosphorus-based antioxidant. Examples of the mold release agent can include a higher fatty acid ester, a higher aliphatic alcohol, a higher fatty acid, a higher fatty acid amide, a higher fatty acid metal salt, and a fatty acid derivative. Examples of the antistatic agent can include a conductive inorganic particle, a tertiary amine, a quaternary ammonium salt, a cationic acrylic acid ester derivative, and a cationic vinyl ether derivative.

A thickness of the first acrylic resin layer is preferably 0.1 mm or more and 1.0 mm or less, more preferably 0.2 mm or more and 0.8 mm or less, and still more preferably 0.2 mm or more and 0.5 mm or less. When the thickness of the first acrylic resin layer is within the above range, there are advantages that the thermoplastic resin layer constituting the laminate can be preferably retained and strength of the laminate can be maintained.

Second Acrylic Resin Layer

The second acrylic resin layer is a resin layer containing a (meth)acrylic resin. In addition, the second acrylic resin layer is formed of a (meth)acrylic resin having a Vicat softening temperature of 115°C or higher and 145°C or lower.

The Vicat softening temperature of the (meth)acrylic resin is measured according to the B50 method defined in JIS K 7206:2016 "Plastics-Thermoplastic materials-Determination of Vicat softening temperature (VST)". The Vicat softening temperature can be measured using a heat distortion tester (for example, manufactured by YASUDA SEIKI SEISAKUSHO, LTD., "148-6 series"). The measurement may be performed using a test piece obtained by injection-molding or press-molding each raw material to a thickness of 3 mm.

In the laminate, when the Vicat softening temperature of the (meth)acrylic resin contained in the second acrylic resin layer is within the above range, there is an advantage that a surface area of a fragment falling due to cracking and peeling at an impact site is significantly reduced particularly in the impact resistance evaluation on a surface of the second acrylic resin layer. Due to a small surface area and weight of the fragment, for example, in a case where the laminate is used as a resin glazing, there is an advantage that it is possible to reduce a risk that peripheral equipment and/or a human body may be damaged by scattered fragments directly hitting the peripheral equipment and/or the human body when the fragments are generated by an impact. Further, since the laminate includes the second acrylic resin layer, there is also an advantage that heat resistance of the entire laminate is improved.

Examples of the (meth)acrylic resin having a Vicat softening temperature of 115°C or higher and 145°C or lower can include a copolymer (A) having a ring structural unit (a1) having a 5- or 6-membered ring structure and a monomer unit (a2) other than the ring structural unit or a copolymer (B) of methyl methacrylate and methacrylic acid. Hereinafter, the copolymers (A) and (B) will be described in detail.

Copolymer (A) Having Ring Structural Unit (a1) Having 5- or 6-Membered Ring Structure and Monomer Unit (a2) Other Than Ring Structural Unit

The copolymer (A) has a structure having a ring structural unit (a1) having a 5- or 6-membered ring structure in a main chain, and is obtained by using two or more monomers which are polymerizable vinyl-based monomers as a raw material. The "main chain" is a carbon chain derived from a vinyl group, formed by polymerizing two or more monomers. The "monomer" refers to a state of a raw material before polymerization, and the "monomer unit" refers to a state of each of units linked after the polymerization. The phrase "having a ring structural unit having a 5- or 6-membered ring structure in a main chain" means that at least two of carbon atoms constituting the main chain serve as a part of the group of atoms forming the ring structure, and as a result, the ring structural unit (a1) having a 5- or 6-membered ring structure is incorporated in the main chain. That is, the copolymer (A) has one or more "ring structural units (a1) having a 5- or 6-membered ring structure" and one or more "monomer units other than the ring structural unit having a 5- or 6-membered ring structure" (hereinafter, referred to as a "monomer unit (a2) other than the above ring structural unit").

Ring Structural Unit (a1) Having 5- or 6-Membered Ring Structure

The "ring structural unit (a1) having a 5- or 6-membered ring structure" included in the copolymer (A) can be formed by ring closure during or after polymerization of two monomers, may be a ring structural unit having a 5- or 6-membered ring structure, or a ring structural unit having a 5- or 6-membered ring structure in which a ring is incorporated in a main chain by polymerization of one monomer having a ring.

The ring structural unit (a1) having a 5- or 6-membered ring structure can be, for example, one or more selected from the group consisting of a glutaric anhydride structural unit, a maleic anhydride structural unit, a maleimide structural unit, a glutarimide structural unit, and a lactone structural unit. In particular, the ring structural unit (a1) having a 5- or 6-membered ring structure can be a glutaric anhydride structural unit.

Hereinafter, each of the structural units having a 5- or 6-membered ring structure will be described.

· Glutaric Anhydride Structural Unit (a1-1)

A glutaric anhydride structural unit is represented by the following Formula (1).

[Formula 1]

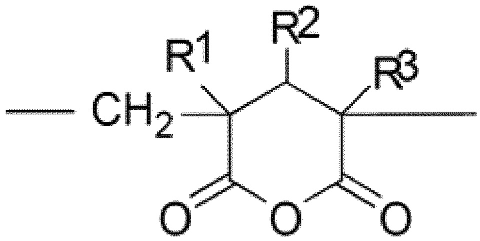

···(1)

[In Formula (1), $R^1$, $R^2$, and $R^3$ each independently represent a hydrogen atom or a substituted or unsubstituted alkyl group having 1 to 20 carbon atoms, preferably a substituted or unsubstituted alkyl group having 1 to 12 carbon atoms, more preferably a substituted or unsubstituted alkyl group having 1 to 8 carbon atoms, and still more preferably a substituted or unsubstituted alkyl group having 1 to 6 carbon atoms, and
the alkyl group may be substituted with a hydroxyl group.]

The glutaric anhydride structural unit (a1-1) can be formed, for example, by cyclocondensation of a polymer obtained from methacrylic acid ester or acrylic acid ester and methacrylic acid or acrylic acid during or after a polymerization step. In particular, the glutaric anhydride structural unit (a1-1) can be formed by cyclocondensation of methacrylic acid or methacrylic acid and methacrylic acid ester.

· Maleic Anhydride Structural Unit (a1-2)

A maleic anhydride structural unit is represented by the following Formula (2).

[Formula 2]

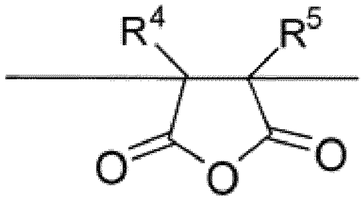

···(2)

[In Formula (2), $R^4$ and $R^5$ each independently represent a hydrogen atom, a halogen atom, a substituted or unsubstituted aryl group having 6 to 20 carbon atoms, or a substituted or unsubstituted alkyl group having 1 to 20 carbon atoms, preferably a substituted or unsubstituted alkyl group having 1 to 12 carbon atoms, more preferably a substituted or unsubstituted alkyl group having 1 to 8 carbon atoms, and still more preferably a substituted or unsubstituted alkyl group having 1 to 6 carbon atoms, and
the alkyl group or the aryl group may be substituted with a hydroxyl group.]

The maleic anhydride structural unit (a1-2) can be formed by copolymerizing a substituted or unsubstituted maleic anhydride in a polymerization step. Examples of the substituted or unsubstituted maleic anhydride can include maleic anhydride, citraconic anhydride, dimethyl maleic anhydride, dichloromaleic anhydride, bromomaleic anhydride, dibromomaleic anhydride, phenyl maleic anhydride, and diphenyl maleic anhydride. Among these maleic anhydrides that may have a substituent, maleic anhydride is preferred in terms of easy copolymerization.

· Maleimide Structural Unit (a1-3)

A maleimide structural unit is represented by the following Formula (3).

[Formula 3]

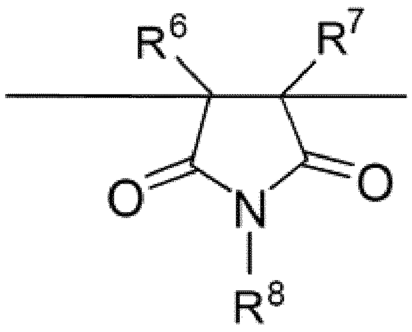

···(3)

[In Formula (3), $R^6$ and $R^7$ each independently represent a hydrogen atom or a substituted or unsubstituted alkyl group having 1 to 20 carbon atoms, preferably a substituted or unsubstituted alkyl group having 1 to 12 carbon atoms, more preferably a substituted or unsubstituted alkyl group having 1 to 8 carbon atoms, and still more preferably a substituted or unsubstituted alkyl group having 1 to 6 carbon atoms,

$R^8$ represents a hydrogen atom or one selected from the group consisting of a substituted or unsubstituted alkyl group having 1 to 12 carbon atoms, a substituted or unsubstituted alkoxy group having 1 to 12 carbon atoms, a substituted or unsubstituted aryl group having 6 to 18 carbon atom, and a substituted or unsubstituted aryloxy group having 6 to 18 carbon atoms, and

the alkyl group, the alkoxy group, the aryl group, or the aryloxy group may be substituted with a hydroxyl group.]

Preferably, Formula (3) is as follows.

[In Formula (3), $R^6$ and $R^7$ each independently represent a hydrogen atom or a substituted or unsubstituted alkyl group having 1 to 6 carbon atoms,

$R^8$ represents a hydrogen atom or one selected from the group consisting of a substituted or unsubstituted alkyl group having 1 to 6 carbon atoms, a substituted or unsubstituted alkoxy group having 1 to 6 carbon atoms, a substituted or unsubstituted aryl group having 6 to 12 carbon atoms, and a substituted or unsubstituted aryloxy group having 6 to 12 carbon atoms, and

the alkyl group, the alkoxy group, the aryl group, or the aryloxy group may be substituted with a hydroxyl group.]

The maleimide structural unit (a1-3) can be formed, for example, by copolymerizing specific monomers in a polymerization step. Such monomers are not particularly limited, and examples thereof can include maleimide, N-methyl maleimide, N-ethyl maleimide, N-cyclohexyl maleimide, and an N-aryl group-substituted maleimide such as N-phenyl maleimide, N-methyl phenyl maleimide, N-ethylphenyl maleimide, N-butylphenyl maleimide, N-dimethylphenyl maleimide, N-hydroxyphenyl maleimide, N-methoxyphenyl maleimide, N-(o-chlorophenyl) maleimide, N-(m-chlorophenyl) maleimide, or N-(p-chlorophenyl) maleimide.

· Glutarimide Structural Unit (a1-4)

A glutarimide structural unit is represented by the following Formula (4).

[Formula 4]

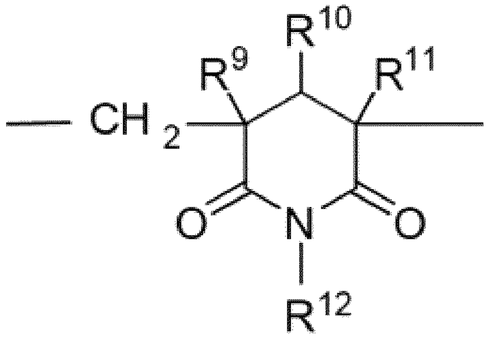

···(4)

[In Formula (4), $R^9$, $R^{10}$, and $R^{11}$ each independently represent a hydrogen atom or a substituted or unsubstituted alkyl group having 1 to 20 carbon atoms, preferably a substituted or unsubstituted alkyl group having 1 to 12 carbon atoms, more preferably a substituted or unsubstituted alkyl group having 1 to 8 carbon atoms, and still more preferably a substituted or unsubstituted alkyl group having 1 to 6 carbon atoms,

$R^{12}$ represents a hydrogen atom or one selected from the group consisting of a substituted or unsubstituted alkyl group having 1 to 12 carbon atoms, a substituted or unsubstituted alkoxy group having 1 to 12 carbon atoms, a substituted or unsubstituted aryl group having 6 to 18 carbon atom, and a substituted or unsubstituted aryloxy group having 6 to 18 carbon atoms, and
the alkyl group, the alkoxy group, the aryl group, or the aryloxy group may be substituted with a hydroxyl group.]

Preferably, Formula (4) is as follows.

[In Formula (4), $R^9$, $R^{10}$, and $R^{11}$ each independently represent a hydrogen atom or a substituted or unsubstituted alkyl group having 1 to 6 carbon atoms,

$R^{12}$ represents a hydrogen atom or one selected from the group consisting of a substituted or unsubstituted alkyl group having 1 to 6 carbon atoms, a substituted or unsubstituted alkoxy group having 1 to 6 carbon atoms, a substituted or unsubstituted aryl group having 6 to 12 carbon atoms, and a substituted or unsubstituted aryloxy group having 6 to 12 carbon atoms, and
the alkyl group, the alkoxy group, the aryl group, or the aryloxy group may be substituted with a hydroxyl group.]

The glutarimide structural unit (a1-4) can be obtained, for example, by a known method such as a method for copolymerizing methacrylic acid ester and/or methacrylic acid, and then causing a reaction thereof with ammonia, an amine, or urea under a high temperature, and a method for causing a reaction of a polymethacrylic anhydride with ammonia or an amine.

· Lactone Structural Unit (a1-5)

A lactone structural unit is represented by the following Formula (5).

[Formula 5]

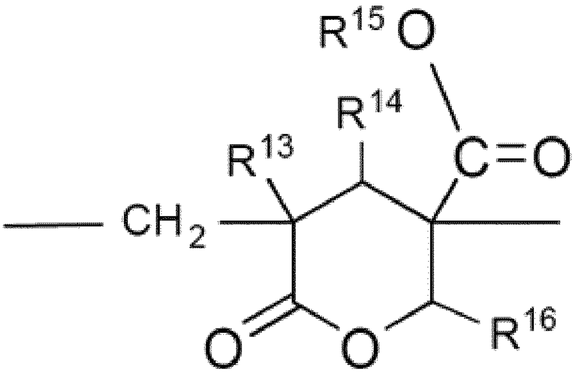

···(5)

[In Formula (5), $R^{13}$, $R^{14}$, and $R^{15}$ each independently represent a hydrogen atom or a substituted or unsubstituted alkyl group having 1 to 20 carbon atoms, preferably a substituted or unsubstituted alkyl group having 1 to 12 carbon atoms, more preferably a substituted or unsubstituted alkyl group having 1 to 8 carbon atoms, and still more preferably a substituted or unsubstituted alkyl group having 1 to 6 carbon atoms,

$R^{16}$ represents a hydrogen atom or one selected from the group consisting of a substituted or unsubstituted alkyl group having 1 to 12 carbon atoms, a substituted or unsubstituted alkoxy group having 1 to 12 carbon atoms, a substituted or unsubstituted aryl group having 6 to 18 carbon atom, and a substituted or unsubstituted aryloxy group having 6 to 18 carbon atoms, and
the alkyl group, the alkoxy group, the aryl group, or the aryloxy group may be substituted with a hydroxyl group.]

Preferably, Formula (5) is as follows.
[In Formula (5), $R^{13}$, $R^{14}$, and $R^{15}$ each independently represent a hydrogen atom or a substituted or unsubstituted alkyl group having 1 to 6 carbon atoms,

$R^{16}$ represents a hydrogen atom or one selected from the group consisting of a substituted or unsubstituted alkyl group having 1 to 6 carbon atoms, a substituted or unsubstituted alkoxy group having 1 to 6 carbon atoms, a substituted or unsubstituted aryl group having 6 to 12 carbon atoms, and a substituted or unsubstituted aryloxy group having 6 to 12 carbon atoms, and
the alkyl group, the alkoxy group, the aryl group, or the aryloxy group may be substituted with a hydroxyl group.]

A method for introducing the lactone structural unit (a1-5) into a polymer is not particularly limited. The lactone structure can be formed, for example, by copolymerizing acrylic acid or acrylic acid ester having a hydroxyl group as a substituent with methacrylic acid ester such as methyl methacrylate to introduce a hydroxyl group, and an ester group or a carboxyl group into a molecular chain, and then causing dealcoholization or dehydration condensation between the hydroxyl group and the ester group or the carboxyl group.
Examples of the acrylic acid or acrylic acid ester having a hydroxyl group used for polymerization can include 2-(hydroxymethyl) acrylic acid, 2-(hydroxyethyl) acrylic acid, alkyl 2-(hydroxymethyl) acrylate, and alkyl 2-(hydroxyethyl) acrylate. 2-(Hydroxymethyl) acrylic acid or alkyl 2-(hydroxymethyl) acrylate having a hydroxyallyl site is preferred. Examples of the alkyl 2-(hydroxymethyl) acrylate can include methyl 2-(hydroxymethyl) acrylate, ethyl 2-(hydroxymethyl) acrylate, isopropyl 2-(hydroxymethyl) acrylate, n-butyl 2-(hydroxymethyl) acrylate, and t-butyl 2-(hydroxymethyl) acrylate. Among them, methyl 2-(hydroxymethyl) acrylate or ethyl 2-(hydroxymethyl) acrylate is particularly preferred.
The ring structural unit having a 5- or 6-membered ring structure is preferably one or more selected from the group consisting of a glutaric anhydride structural unit, a maleic anhydride structural unit, a maleimide structural unit, a glutarimide structural unit, and a lactone structural unit, and a glutaric anhydride structural unit is more preferred.
Monomer Unit (a2) Other Than Ring Structural Unit and Monomer Mixture
The copolymer (A) has a monomer unit (a2) other than the ring structural unit in addition to the ring structural unit (a1) having a 5- or 6-membered ring structure. A monomer as a raw material of the monomer unit (a2) other than the ring structural unit is not particularly limited as long as it is a polymerizable vinyl-based monomer.
The copolymer (A) can be prepared by polymerizing a monomer mixture obtained by using both a ring structural unit (a1) having a 5- or 6-membered ring structure and a monomer unit (a2) other than the ring structural unit. Here, an example of the monomer that can be included in the monomer mixture can include a monomer that can be obtained by forming the ring structural unit (a1) having a 5- or 6-membered ring structure described above by ring closure between monomers. In addition, another example thereof can include a monomer which has a ring structure at the time of monomer and can be polymerized as a ring structural unit (a1) having a 5- or 6-membered ring structure as it is. The monomer

that can be the ring structural unit (a1) having a 5- or 6-membered ring structure as described above is included in the monomer mixture so that a Vicat softening temperature of the resulting copolymer is within a range of 115°C or higher and 145°C or lower. In addition, a monomer that does not become the ring structural unit (a1) having a 5- or 6-membered ring structure is present as a monomer unit (a2) other than the ring structural unit in the copolymer as it is.

In the preparation of the copolymer (A), for example, a monomer mixture including two or more selected from the group consisting of methacrylic acid, methacrylic acid ester, acrylic acid, acrylic acid ester, aromatic vinyl, substituted or unsubstituted maleic anhydride, and substituted or unsubstituted maleimide can be used. It is preferable that the monomer mixture includes methacrylic acid or both methacrylic acid and methacrylic acid ester.

The methacrylic acid ester is a monomer represented by the following Formula (6).

[Formula 6]

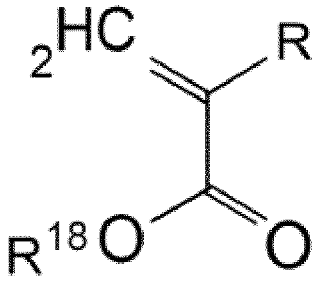

···(6)

[In Formula (6), $R^{17}$ represents a methyl group,

$R^{18}$ represents a substituted or unsubstituted alkyl group having 1 to 20 carbon atoms, preferably a substituted or unsubstituted alkyl group having 1 to 12 carbon atoms, more preferably a substituted or unsubstituted alkyl group having 1 to 8 carbon atoms, and still more preferably a substituted or unsubstituted alkyl group having 1 to 6 carbon atoms, and

the alkyl group may be substituted with a hydroxyl group.]

The methacrylic acid ester represented by Formula (6) is not particularly limited, and examples thereof can include methyl methacrylate, ethyl methacrylate, butyl methacrylate, propyl methacrylate, isopropyl methacrylate, cyclohexyl methacrylate, phenyl methacrylate, methacrylic acid (2-ethylhexyl), methacrylic acid (t-butylcyclohexyl), benzyl methacrylate, and methacrylic acid (2,2,2-trifluoroethyl). These methacrylic acid esters may be used alone or in combination of two or more thereof.

The acrylic acid ester is a monomer represented by the following Formula (7).

[Formula 7]

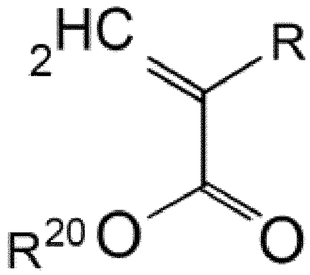

···(7)

[In Formula (7), $R^{19}$ represents a hydrogen atom,

$R^{20}$ represents a substituted or unsubstituted alkyl group having 1 to 20 carbon atoms, preferably a substituted or unsubstituted alkyl group having 1 to 12 carbon atoms, more preferably a substituted or unsubstituted alkyl group having 1 to 8 carbon atoms, and still more preferably a substituted or unsubstituted alkyl group having 1 to 6 carbon

atoms, and
the alkyl group may be substituted with a hydroxyl group.]

The acrylic acid ester represented by Formula (7) is not particularly limited, and examples thereof can include methyl acrylate, ethyl acrylate, n-propyl acrylate, n-butyl acrylate, sec-butyl acrylate, 2-ethylhexyl acrylate, cyclohexyl acrylate, and phenyl acrylate. These acrylic acid esters may be used alone or in combination of two or more thereof.
The aromatic vinyl is a monomer represented by the following Formula (8).

[Formula 8]

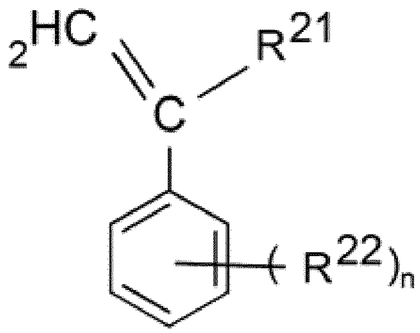

···(8)

[In Formula (8), $R^{21}$ represents a hydrogen atom or a substituted or unsubstituted alkyl group having 1 to 20 carbon atoms, preferably a substituted or unsubstituted alkyl group having 1 to 12 carbon atoms, more preferably a substituted or unsubstituted alkyl group having 1 to 8 carbon atoms, and still more preferably a substituted or unsubstituted alkyl group having 1 to 6 carbon atoms,

n represents an integer of 0 to 5,
$R^{22}$ represents a hydrogen atom or one selected from the group consisting of a substituted or unsubstituted alkyl group having 1 to 12 carbon atoms, a substituted or unsubstituted alkoxy group having 1 to 12 carbon atoms, a substituted or unsubstituted aryl group having 6 to 18 carbon atom, and a substituted or unsubstituted aryloxy group having 6 to 18 carbon atoms,
all $R^{22}$'s may be the same groups or different groups,
$R^{22}$'s may form a ring structure, and
the alkyl group, the alkoxy group, the aryl group, or the aryloxy group may be substituted with a hydroxyl group.]

Preferably, Formula (8) is as follows.
[In Formula (8), $R^{21}$ represents a hydrogen atom or a substituted or unsubstituted alkyl group having 1 to 6 carbon atoms,

n represents an integer of 0 to 5,
$R^{22}$ represents a hydrogen atom or one selected from the group consisting of a substituted or unsubstituted alkyl group having 1 to 6 carbon atoms, a substituted or unsubstituted alkoxy group having 1 to 6 carbon atoms, a substituted or unsubstituted aryl group having 6 to 12 carbon atoms, and a substituted or unsubstituted aryloxy group having 6 to 12 carbon atoms,
all $R^{22}$'s may be the same groups or different groups,
$R^{22}$'s may form a ring structure, and
the alkyl group, the alkoxy group, the aryl group, or the aryloxy group may be substituted with a hydroxyl group.]

The aromatic vinyl represented by Formula (8) is not particularly limited, and examples thereof can include styrene, o-methylstyrene, m-methylstyrene, p-methylstyrene, 2,4-dimethylstyrene, 2,5-dimethylstyrene, 3,4-dimethylstyrene, 3,5-dimethylstyrene, p-ethylstyrene, methylstyrene, o-ethylstyrene, p-tert-butylstyrene, 1-vinylnaphthalene, 2-vinylnaphthalene, 1,1-diphenylethylene, isopropenylbenzene (α-methylstyrene), isopropenyltoluene, isopropenylethylbenzene, isopropenylpropylbenzene, isopropenylbutylbenzene, isopropenylpentylbenzene, isopropenylhexylbenzene, and isopropenyloctylbenzene. As the aromatic vinyl, one kind thereof may be used alone, or two or more kinds thereof may be used in combination.

Although not particularly limited, an example of the copolymer obtained from the monomer mixture described above can include a polymer having a structural unit having a ring structural unit (a1) having a 5- or 6-membered ring structure as described below in a part of the polymer. In the formula, n represents an integer.

A structural unit (Formula (9)) having the following glutaric anhydride structural unit (a1-1) is formed by using, for example, methyl methacrylate, methacrylic acid, and styrene as the monomers.

[Formula 9]

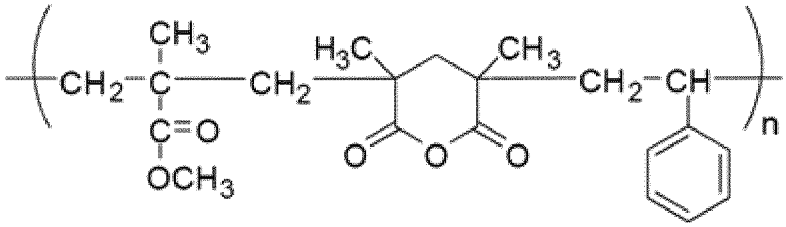

···(9)

Furthermore, a structural unit (Formula (10)) having the following glutaric anhydride structural unit (a1-1) is formed by using, for example, methyl methacrylate and methacrylic acid as monomers.

[Formula 10]

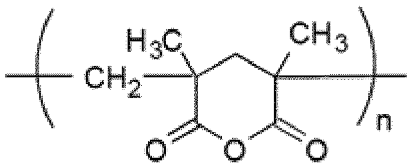

···(10)

A structural unit (Formula (11)) having the following maleic anhydride structural unit (a1-2) is formed by using, for example, methyl methacrylate, maleic anhydride, styrene, and $\alpha$-methylstyrene as monomers.

[Formula 11]

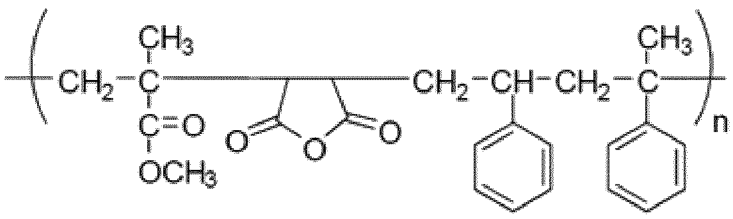

···(11)

A structural unit (Formula (12)) having the following maleimide structural unit (a1-3) is formed by using, for example, methyl methacrylate, N-cyclohexylmaleimide, and styrene as monomers.

[Formula 12]

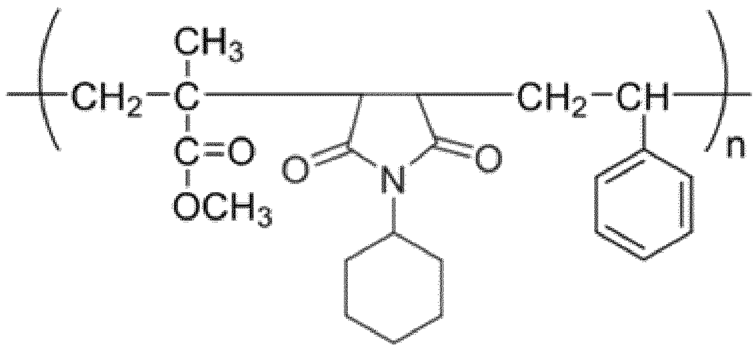

···(12)

A structural unit (Formula (13)) having the following lactone structural unit (a1-5) is formed by using, for example, methyl methacrylate, methyl methacrylate, and methyl 2-(hydroxymethyl) acrylate as monomers.

[Formula 13]

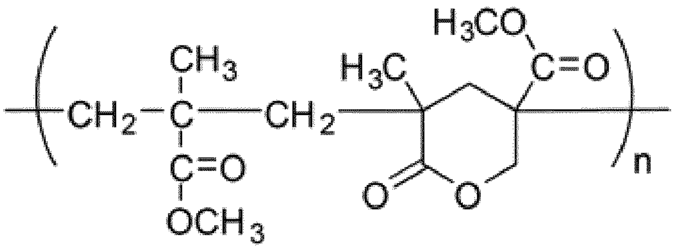

···(13)

The monomer unit (a2) other than the ring structural unit has, for example, at least one selected from the group consisting of a monomer unit derived from methacrylic acid (Formula (14)), a monomer unit derived from methacrylic acid ester (Formula (15)), a monomer unit derived from acrylic acid (Formula (16)), a monomer unit derived from acrylic acid ester (Formula (17)), and a monomer unit derived from aromatic vinyl (Formula (18)).

In particular, the monomer unit (a2) other than the ring structural unit has, for example, at least one selected from a monomer unit derived from methacrylic acid (Formula (14)), a monomer unit derived from methacrylic acid ester (Formula (15)), a monomer unit derived from acrylic acid (Formula (16)), and a monomer unit derived from acrylic acid ester (Formula (17)).

$R^{18}$ in Formula (15) is the same as $R^{18}$ in Formula (6) described above, $R^{20}$ in Formula (17) is the same as $R^{20}$ in Formula (7) described above, and $R^{21}$ and $R^{22}$ in Formula (18) are the same as $R^{21}$ and $R^{22}$ in Formula (8) described above.

[Formula 14]

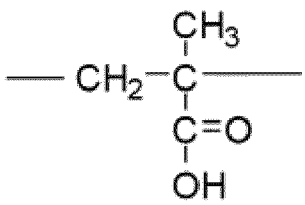

···(14)

[Formula 15]

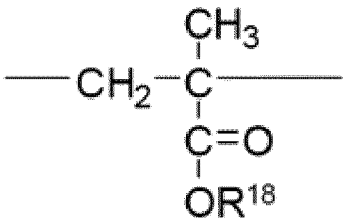

···(15)

[Formula 16]

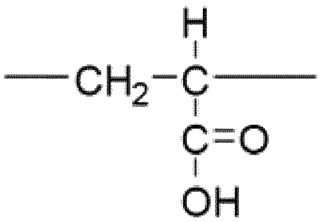

···(16)

[Formula 17]

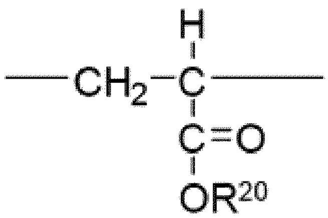

···(17)

[Formula 18]

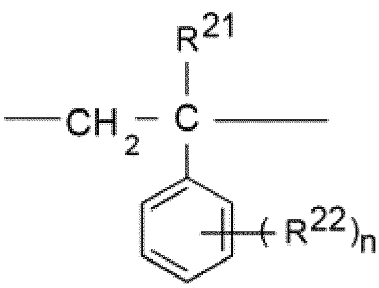

···(18)

For example, in a case where methacrylic acid (or acrylic acid) or methacrylic acid and methacrylic acid ester (acrylic acid and acrylic acid ester) are used as a part or all of a monomer as a raw material, the monomer unit (a2) other than the ring structural unit in the resulting copolymer can have a monomer unit derived from methacrylic acid (or a monomer unit derived from acrylic acid), or a monomer unit derived from methacrylic acid and a monomer unit derived from methacrylic acid ester (or a monomer unit derived from acrylic acid and a monomer unit derived from acrylic acid ester). Methacrylic acid ester or acrylic acid ester is preferably methyl methacrylate or methyl acrylate.

Since the copolymer (A) has a structural unit (a1) having a 5- or 6-membered ring structure, the copolymer (A) has a Vicat softening temperature of 115°C or higher and 145°C or lower. The copolymer (A) can be prepared by appropriately adjusting a proportion of the ring structural unit (a1) having a 5- or 6-membered ring structure so that a Vicat softening temperature of the obtained copolymer is 115°C or higher and 145°C or lower.

Method of Producing Copolymer (A)

The copolymer (A) can be prepared by polymerizing a monomer mixture obtained by using a ring structural unit (a1) having a 5- or 6-membered ring structure and a monomer unit (a2) other than the ring structural unit. A method of polymerizing a monomer mixture is not particularly limited, but a known polymerization method such as suspension polymerization, solution polymerization, or state polymerization can be adopted. In particular, suspension polymerization can be adopted. Suspension polymerization is performed, for example, by putting water, a polymerization initiator, a chain transfer agent, a suspension stabilizer and, if necessary, another additive or the like in an autoclave, supplying a monomer mixture usually under stirring, and performing heating. The amount of water used is 1 to 5 times, and particularly, 1 to 3 times the amount of the component of the monomer mixture in terms of volume ratio.

The polymerization initiator is not particularly limited. For example, a known radical polymerization initiator such as peroxide, for example, lauryl peroxide, 1,1-di(tert-butylperoxy) cyclohexane, or the like, or an azo compound, for example, azobisisobutyronitrile or the like can be used. The polymerization initiators may be used alone or in combination of two or more thereof.

The chain transfer agent is not particularly limited, and examples thereof can include mercaptans such as n-dodecyl mercaptan (in particular, 1-dodecyl mercaptan), n-butyl mercaptan, n-octyl mercaptan, and 2-ethylhexyl thioglycolate. The chain transfer agents may be used alone or in combination of two or more thereof.

Examples of the suspension stabilizer can include water-soluble cellulose ethers such as methyl cellulose, hydroxyethyl cellulose, hydroxypropyl cellulose, and hydroxypropyl methyl cellulose. In addition, a water-soluble polymer such as a partially saponified vinyl alcohol, an acrylic acid polymer, or gelatin can be used.

In the suspension polymerization, for example, a slurry-like reaction product obtained after polymerization is dehydrated and washed if necessary, and then dried. After the drying, a bead-like copolymer (A) is obtained. The bead-like copolymer (A) may be used as it is, or may be further extruded with an extruder (for example, a degassing extruder) to be formed into a pellet-like copolymer (A). The copolymer (A) capable of suppressing yellowness of a molded body can also be produced by selecting an appropriate polymerization method and conditions thereof. For example, a granulation temperature at the time of using an extruder is set to a suitable temperature that is not too high (for example, 190°C or higher and 250°C or lower, and preferably 210°C or higher and 220°C or lower). Alternatively, for example, the retention time in the extruder is set to an appropriate time that is not too long. For example, when a screw rotational speed of the extruder is 60 rpm or more and 100 rpm or less, and preferably 80 rpm, a throughput is set to 1 kg/Hr or more and 2.0 kg/Hr or less, and preferably 1 kg/Hr or more and 1.5 kg/Hr or less in terms of a composition throughput per retention time in the extruder. Alternatively, for example, in a post-treatment, heating for a long time is prevented at a high temperature (for example, about 290°C). By performing appropriate selection and setting as described above, it is possible to significantly prevent ring closure condensation. As a result, the Vicat can be adjusted within the predetermined range described above.

For example, in a case where the copolymer (A) has a glutaric anhydride structural unit, a maleic anhydride structural unit, a maleimide structural unit, a glutarimide structural unit, a lactone structural unit, or the like as a ring structural unit (a1) having a 5- or 6-membered ring structure, the ring structural unit (a1) is preferably within a range of 3 to 40 mol%, and more preferably 10 to 30 mol%, with respect to the total of the ring structural unit (a1) and the monomer unit (a1) other than the ring structural unit.

In addition, in a case where methacrylic acid (or acrylic acid) or methacrylic acid and methacrylic acid ester (acrylic acid and acrylic acid ester) are used as a part or all of a monomer as a raw material, the monomer unit (a2) other than the ring structural unit in the resulting copolymer can have a monomer unit derived from methacrylic acid (or a monomer unit derived from acrylic acid), or a monomer unit derived from methacrylic acid and a monomer unit derived from methacrylic acid ester (or a monomer unit derived from acrylic acid and a monomer unit derived from acrylic acid ester). Methacrylic acid ester or acrylic acid ester is preferably methyl methacrylate or methyl acrylate. In one aspect of the above case, in the heat treatment (for example, at the time of resin granulation or the like) during resin preparation, processing, or the like, a part of each of methacrylic acid ester and methacrylic acid (or acrylic acid ester and acrylic acid) is subjected to cyclization condensation to form a ring structural unit such as a glutaric anhydride structure.

In such a case, the monomer unit (a2) other than the ring structural unit can have a monomer unit derived from methacrylic acid ester (or a monomer unit derived from acrylic acid ester) in an amount of 60 mol% or more and 98.99 mol% or less and preferably 74.64 mol% or more and 98.98 mol% or less with respect to the total of the ring structural unit (a1) and the monomer unit (a2) other than the ring structural unit.

Furthermore, the monomer unit (a2) other than the ring structural unit can have a monomer unit derived from

methacrylic acid (or a monomer unit derived from acrylic acid) in an amount of 1 mol% or more and 30 mol% or less, preferably 1 mol% or more and 26 mol% or less, more preferably 6 mol% or more and 26 mol% or less, still more preferably 7.48 mol% or more and 25.2 mol% or less, and further still more preferably 10 mol% or more and 25.2 mol% or less, with respect to the same total.

Furthermore, the monomer unit (a2) other than the ring structural unit can have a glutaric anhydride structure obtained by cyclocondensation of methacrylic acid ester and methacrylic acid (or acrylic acid ester and acrylic acid) in an amount of 0.01 mol% or more and 10 mol% or less, preferably 0.02 mol% or more and 9 mol% or less, more preferably 0.02 mol% or more and 8 mol% or less, still more preferably 0.02 mol% or more and 5 mol% or less, further still more preferably 0.02 mol% or more and 4.1 mol% or less, further still more preferably 0.02 mol% or more and less than 3 mol%, further still more preferably 0.02 mol% or more and 2.5 mol% or less, and further still more preferably 0.02 mol% or more and 0.16 mol% or less, with respect to the same total.

In the aspect, the Vicat softening temperature can be set to a suitable numerical value by having the monomer unit derived from methacrylic acid (or the monomer unit derived from acrylic acid) within a predetermined proportion (mol%) range as compared to methacrylic acid ester (or acrylic acid ester). Furthermore, weather resistance and optical properties of the polymer can be enhanced by having a large amount of monomer unit derived from methacrylic acid ester or acrylic acid ester (in particular, methyl methacrylate or methyl acrylate).

A thickness of the second acrylic resin layer can be appropriately selected depending on the use of the laminate. The thickness of the second acrylic resin layer is preferably 0.1 mm or more and 30 mm or less. When the thickness of the second acrylic resin layer is within the above range, there is an advantage that physical strength of the laminate can be designed in a preferred range depending on the use of the laminate. For example, in a case where the laminate is used as a resin glazing material, the thickness of the second acrylic resin layer is preferably 0.5 mm or more and 10 mm or less and more preferably 1.0 mm or more and 8 mm or less.

A ratio [T1:T2] of a thickness T1 of the first acrylic resin layer to a thickness T2 of the second acrylic resin layer is within a range of T1:T2 = 1:1.9 to 1:29. When the ratio [T1:T2] is within the above range, there is an advantage that impact resistance and physical strength of the entire laminate are in more preferred ranges. For example, in a case where the laminate is used as a glazing for an automobile or building material, there is an advantage that the laminate can withstand a stronger impact by installing the second acrylic resin layer on the outdoor side.

## Third Acrylic Resin Layer

The laminate may include a third acrylic resin layer, if necessary. In a case where the laminate includes the third acrylic resin layer, the third acrylic resin layer is a layer provided between the second acrylic resin layer and a thermoplastic resin layer described in detail below.

The third acrylic resin layer is a resin layer containing a (meth)acrylic resin. The third acrylic resin layer may have the same composition as or a different composition from that of the first acrylic resin layer.

The third acrylic resin layer may have the same composition as or a different composition from that of the second acrylic resin layer.

A Vicat softening temperature of the (meth)acrylic resin constituting the third acrylic resin layer may be 90°C or higher and 145°C or lower.

The third acrylic resin layer may be formed of a methacrylic copolymer having, for example, 50% by mass or more and less than 100% by mass of a structural unit derived from alkyl methacrylate having an alkyl group having 1 to 4 carbon atoms, and more than 0% by mass and 50% by mass or less of a structural unit derived from another vinyl monomer copolymerizable with a structural unit derived from methacrylic acid ester having an alkyl group having 1 to 4 carbon atoms as long as transparency and weather resistance are not impaired.

The third acrylic resin layer may further contain another resin different from the (meth)acrylic resin, if necessary. In a case where another resin is contained, the type thereof is not particularly limited as long as the transparency of the resin laminate is not significantly impaired. The amount of another resin is preferably 40% by mass or less, more preferably 10% by mass or less, and still more preferably 5% by mass or less, based on the total resin contained in the third acrylic resin layer, from the viewpoint of transparency and weather resistance of the resin laminate. Examples of the another resin can include a polycarbonate resin, a polyamide resin, an acrylonitrile-styrene copolymer, a methyl methacrylatestyrene copolymer, and polyethylene terephthalate.

The third acrylic resin layer can be formed, for example, according to a manufacturing method of a laminate. For example, when the laminate is manufactured by extrusion molding in which a melt of the resin composition is discharged from a die, the third acrylic resin layer may not be provided. In addition, for example, in the manufacturing of the laminate, first, in a case where a laminate is manufactured by manufacturing a laminate for an injection molding including a first acrylic resin layer, a thermoplastic resin layer, and a third acrylic resin layer in this order, disposing the obtained laminate for an injection molding in a mold, and molding a second acrylic resin layer by injecting a resin composition (2) containing a (meth)acrylic resin on the third acrylic resin layer of the laminate for an injection molding

disposed in the mold, the obtained laminate contains a third acrylic resin. In this case, in a case where the second acrylic resin layer and the third acrylic resin layer have substantially the same compositions, a clear compositional boundary between these resin layers is not present in the obtained laminate.

In a case where the laminate includes the third acrylic resin layer, a thickness of the third acrylic resin layer is preferably 0.01 mm or more and 1.0 mm or less. The thickness is more preferably 0.03 mm or more and 0.5 mm or less and still more preferably 0.05 mm or more and 0.4 mm or less. When the thickness of the third acrylic resin layer is within the above range, there is an advantage that the thermoplastic resin layer of the laminate for an injection molding can be preferably retained during, for example, injection molding.

In addition, in a case where the laminate includes the third acrylic resin layer, a ratio [$T_1$:($T_2$ + $T_3$)] of a thickness $T_1$ of the first acrylic resin layer to the sum of a thickness $T_2$ of the second acrylic resin layer and a thickness $T_3$ of the third acrylic resin layer is within a range of $T_1$:($T_2$ + $T_3$) = 1:2 to 1:30. When the ratio [$T_1$:($T_2$ + $T_3$)] is within the above range, there is an advantage that impact resistance and physical strength of the entire laminate are in more preferred ranges. For example, in a case where the laminate is used as a glazing for an automobile or building material, there is an advantage that the laminate can withstand a stronger impact by installing the second acrylic resin layer on the outdoor side.

Thermoplastic Resin Layer

The thermoplastic resin layer is a layer provided between the first acrylic resin layer and the second acrylic resin layer. It is preferable that the thermoplastic resin layer contains 71% or more of a component having a spin-spin relaxation time $T_2^H$ in pulse NMR measurement of 0.03 ms or longer. In the laminate, when the thermoplastic resin layer contains 71% or more of a component having a spin-spin relaxation time of proton nuclues $T_2^H$ in pulse NMR measurement of 0.03 ms or longer, there is an advantage that impact resistance, in particular, impact resistance at a low temperature is excellent.

Preferably, when the thermoplastic resin layer contains 71% or more of a component having a spin-spin relaxation time $T_2^H$ of 0.03 ms or longer and 1.0 ms or shorter, impact resistance, in particular, impact resistance at a low temperature is excellent.

The thermoplastic resin layer preferably contains 99% or less and more preferably 95% or less of a component having a spin-spin relaxation time $T_2^H$ in pulse NMR measurement of 0.03 ms or longer, from the viewpoint of molding processing of the resin laminate.

The spin-spin relaxation time $T_2^H$ in pulse NMR measurement means a time required to decrease a magnetic resonance signal immediately after a longitudinal magnetization vector is tilted in a direction perpendicular to a static magnetic field to 1/e. When the spin-spin relaxation time $T_2^H$ is long, the composition can be referred to as an amorphous phase that is a component having high motility. In addition, when the spin-spin relaxation time $T_2^H$ is short, the component can be referred to as a crystal phase that is a component having low motility, and an intermediate component can be referred to as an interface phase.

In the present specification, the "component having a spin-spin relaxation time $T_2^H$ in pulse NMR measurement of 0.03 ms or longer" means, among the components described above, a component having a long spin-spin relaxation time $T_2^H$ and a component having an intermediate spin-spin relaxation time $T_2^H$.

The spin-spin relaxation time $T_2^H$ in the thermoplastic resin layer is calculated as a relaxation time T2 and a component fraction R of hydrogen 1 from attenuation of a signal intensity I($\tau$) obtained by changing a value of a waiting time $\tau$ in a pulse sequence in the Solid Echo method using a pulse NMR apparatus.

The attenuation of the signal intensity I($\tau$) by the Solid Echo method is acquired by the method described in J.G. Powles, J.H. Strange, Proc. Phys. Soc., 82, 6-15 (1963).

The obtained signal intensity I($\tau$) is expressed as $I_N(\tau)$ which is a value normalized by a signal intensity I($\tau_0$) when a time $\tau$ is $\tau$ = 0. $I_N(\tau)$ is plotted against the time $\tau$, and $T_2^H$ and R are calculated from fitting using a calculation curve $I_F(\tau)$ calculated by Equation (F1), in which units of $T_2^H$ and R are a millisecond and a component fraction, respectively.

[Math. 1]

$$I_F(\tau)=\sum_{n=1}^{4}\left\{R_n \times \exp\left[-\left(\frac{1}{a_n}\right)\times\left(\frac{\tau}{T_{2n}{}^{H}}\right)^{a_n}\right]\right\} \quad (F1)$$

[wherein, $R_n$ represents a component fraction calculated by fitting so that the sum of the terms in Equation (F1) has the

same value as the normalized signal intensity $I_N(\tau)$ acquired by measurement, and $T_{2n}^H$ and $a_n$ represent a relaxation time and a shape factor calculated by fitting, respectively.]

In the fitting, each of Rn, $T_{2n}^H$, and an is a value at which a root mean square s represented by Equation (F2) is less than 0.01.

[Math. 2]

$$s = \sqrt{\frac{1}{k}\sum_{\tau=0}^{\tau_D}\left(I_N(\tau) - I_F(\tau)\right)^2} \quad (F2)$$

[wherein, $\tau_D$ represents a time during which $I_N(\tau)$ sufficiently attenuates and is a value when $I_N(\tau)/I_N(\tau_D)$ is less than 0.01, and k represents the number of data points of the signal intensity $I_N(\tau)$ acquired when the time $\tau$ is between $\tau_0$ to $\tau_D$.]

In the pulse NMR measurement, a form of a measurement sample of the thermoplastic resin layer may be a powder sample or a molded sample.

An example of the pulse NMR apparatus can include a 20 MHz pulse NMR apparatus (manufactured by Bruker Corporation).

The thermoplastic resin layer contains various resins provided that it contains 71% or more of a component having a spin-spin relaxation time $T_2^H$ in pulse NMR measurement of 0.03 ms or longer. Examples of the resin contained in the thermoplastic resin layer can include a polyurethane resin, a polyvinyl acetal resin, an ethylene-methacrylic acid ester copolymer resin, and an ethylene-vinyl acetate copolymer resin.

Examples of the polyurethane resin that can be used as the thermoplastic resin can be produced, for example, by reacting a polyisocyanate, a polyol, and a chain extender with each other.

Specific examples of the polyisocyanate can include diphenylmethane diisocyanate, hexamethylene diisocyanate, tolylene 2,4-diisocyanate, tolylene 2,6-diisocyanate, or a mixture thereof, 1,5-naphthalene diisocyanate, isophorone diisocyanate, xylylene diisocyanate, cyclohexane-1,4-diisocyanate, dicyclohexylmethane 2,2'-diisocyanate, dicyclohexylmethane 2,4'-diisocyanate, dicyclohexylmethane 4,4'-diisocyanate, or a mixture thereof, and 1-methylcyclohexane 2,4-diisocyanate, 1-methylcyclohexane-2,6-diisocyanate, or a mixture thereof. Among the polyisocyanates, diphenylmethane diisocyanate, hexamethylene diisocyanate, dicyclohexylmethane diisocyanate, and the like are more preferably used.

Examples of the polyol can include a polyester polyol, a polyether polyol, and a lactone-based polyol.

The polyester polyol is obtained by a polycondensation reaction of a dicarboxylic acid and a diol. Specific examples of the diol can include ethanediol, 1,3-propanediol, 1,4-butanediol, 1,5-pentanediol, and 1,6-hexanediol. These diols may be used alone or in combination of two or more thereof. Examples of the dicarboxylic acid can include succinic acid, maleic acid, glutaric acid, adipic acid, sebacic acid, phthalic acid, isophthalic acid, and terephthalic acid. These diols may be used alone or in combination of two or more thereof.

The polyether polyol can be prepared, for example, by ring-opening polymerization of alkylene oxide. Specific examples of the polyether polyol can include polyethylene ether glycol, polypropylene ether glycol, and polytetramethylene ether glycol. These diols may be used alone or in combination of two or more thereof. Among them, polytetramethylene ether glycol is preferred. A number average molecular weight thereof is 500 to 10,000 and preferably 1,000 to 4,000.

The lactone-based polyol can be prepared, for example, by ring-opening polymerization of a lactone monomer (for example, δ-valerolactone, β-methyl-δ-valerolactone, ε-caprolactone, α-methyl-ε-caprolactone, β-methyl-ε-caprolactone, γ-methyl-ε-caprolactone, β,δ-dimethyl-ε-caprolactone, 3,3,5-trimethyl-ε-caprolactone, enantholactone, dodecanolactone, or the like) using the diol and/or the glycol as an initiator.

Examples of the chain extender can include an aliphatic linear diol having 2 to 6 carbon atoms such as ethanediol, 1,4-butanediol, or 1,6-hexanediol, and 1,4-bis(hydroxyethoxy)benzene. Amines such as hexamethylenediamine, isophoronediamine, tolylenediamine, and monoethanolamine can also be partially used in combination. Among them, an aliphatic linear diol having 2 to 6 carbon atoms is preferred.

A specific example of the polyurethane resin that can be used as the thermoplastic resin can include a block copolymer formed of a soft segment formed by a reaction of a polyol and a polyisocyanate and a hard segment formed by a reaction of a chain extender and a polyisocyanate. Here, a component having a spin-spin relaxation time $T_2^H$ in pulse NMR measurement of shorter than 0.03 ms corresponds to the hard segment that is a crystal phase component having low mobility. In addition, a component having a spin-spin relaxation time $T_2^H$ in pulse NMR measurement of 0.03 ms or longer corresponds to the soft segment. In the polyurethane resin, a ratio of the hard segment to the soft segment

can be adjusted by adjusting a ratio between the polyisocyanate, the polyol, and the chain extender used for preparation, a size of a phase separation structure or a crystal structure, and the like.

As the polyurethane resin that can be used as the thermoplastic resin, a commercially available product may be used. Examples of the commercially available products can include PANDEX T-1185N, T-8185N, T-1180N, T-8180N, and T-8175N manufactured by DIC Covestro Polymer Ltd. and Elastollan 1180A and NY80A manufactured by BASF SE.

The ethylene-vinyl acetate copolymer that can be used as the thermoplastic resin is a copolymer resin having a monomer unit based on ethylene and a monomer unit based on vinyl acetate. The ethylene-vinyl acetate copolymer resin can be produced, for example, by subjecting ethylene and vinyl acetate to a radical polymerization reaction using a radical polymerization initiator.

In the ethylene-vinyl acetate copolymer resin, for example, a content of the vinyl acetate that is a content of the monomer unit based on vinyl acetate contained in an ethylene-vinyl acetate copolymer is preferably 20 to 40% by mass and more preferably 25 to 35% by mass. The content of the vinyl acetate in the ethylene-vinyl acetate copolymer resin is a value when the mass of the ethylene-vinyl acetate copolymer resin is 100% by mass.

When the content of the vinyl acetate is within the above range, the ethylene-vinyl acetate copolymer resin to be obtained can be preferably designed so that a component having a spin-spin relaxation time $T_2^H$ in pulse NMR measurement of 0.03 ms or longer is contained in an amount of 71% or more. When the content of the vinyl acetate is within the above range, excellent transparency and flexibility can be secured.

As the ethylene-vinyl acetate copolymer resin, a commercially available product may be used. Examples of the commercially available product can include SUMITATE KA-30 and KA-40 manufactured by Sumitomo Chemical Co., Ltd.

Examples of the ethylene-methacrylic acid ester copolymer resin that can be used as the thermoplastic resin can include a copolymer of ethylene and one or two or more monomers selected from methyl methacrylate, ethyl methacrylate, propyl methacrylate, butyl methacrylate, 2-ethylhexyl methacrylate, hydroxyethyl methacrylate, and hydroxypropyl methacrylate. Among the above monomers, methyl methacrylate is particularly preferably used.

The ethylene-methacrylic acid ester copolymer resin can be adjusted by adjusting a content of the methacrylic acid ester so that a percentage of a component having a spin-spin relaxation time $T_2^H$ in pulse NMR measurement of 0.03 ms or longer in the ethylene-methacrylic acid ester copolymer resin to be obtained is 710 or more. The content of the methacrylic acid ester is preferably 15% by mass or more and 40% by mass or less and more preferably 18% by mass or more and 30% by mass or less. When the amount of methacrylic acid ester is 15% by mass or more, excellent transparency and excellent adhesion to the first acrylic resin layer, the second acrylic resin layer, and the like can be obtained. In addition, when the amount of methacrylic acid ester is 40% by mass or less, excellent impact resistance can be obtained.

As the ethylene-methacrylic acid ester copolymer resin, a commercially available product may be used. Examples of the commercially available product can include ACRYFT WK307, WK402, and WH206-F manufactured by Sumitomo Chemical Co., Ltd.

Examples of the polyvinyl acetal resin that can be used as the thermoplastic resin can include a resin obtained by acetalizing some or all of the hydroxyl groups of polyvinyl alcohol.

An example of a method of producing the polyvinyl acetal resin can include a method in which polyvinyl alcohol is dissolved in warm water, the obtained polyvinyl alcohol aqueous solution is maintained at 0 to 90°C, and preferably 10 to 20°C, an acid catalyst and aldehyde are added to allow an acetalization reaction to proceed while performing stirring, a reaction temperature is raised to 70°C for aging to complete the reaction, and then neutralization, water washing, and drying are performed to obtain a powder of a polyvinyl acetal resin.

The aldehyde is not particularly limited, but examples thereof can include aliphatic, aromatic, and alicyclic aldehydes such as propionaldehyde, n-butyraldehyde, isobutyraldehyde, valeraldehyde, n-hexylaldehyde, 2-ethylbutyraldehyde, n-heptylaldehyde, n-octylaldehyde, n-nonylaldehyde, n-decylaldehyde, benzaldehyde, and cinnamaldehyde. Preferably, n-butyraldehyde, n-hexylaldehyde, 2-ethylbutyraldehyde, or n-octylaldehyde having 4 to 8 carbon atoms is used. When n-butyllaldehyde having 4 carbon atoms is used for a polyvinyl acetal resin to be obtained, whether resistance is excellent and a resin is easily produced, which is preferable. These polyvinyl acetal resins may be used alone or in combination of two or more thereof. The polyvinyl acetal resin may not be crosslinked or may be crosslinked.

As the polyvinyl acetal resin, a polyvinyl acetal resin having a degree of acetalization of 60 to 85 mol% can be preferably used. The degree of acetalization is more preferably 65 to 80 mol%. When the degree of acetalization is within the above range, a percentage of a component having a spin-spin relaxation time $T_2^H$ in pulse NMR measurement of 0.03 ms or longer in the polyvinyl acetal resin to be obtained can be preferably adjusted to 71% or more.

Among the thermoplastic resins, a polyurethane resin, an ethylene-vinyl acetate copolymer resin, an ethylene-methacrylic acid ester copolymer resin, and the like are preferably used, and a polyurethane resin is particularly preferably used.

The thermoplastic resins may be used alone or in combination of two or more thereof.

A thickness of the thermoplastic resin layer is preferably 0.05 mm or more and 2.5 mm or less, more preferably

0.1 mm or more and 2.0 mm or less, and still more preferably 0.2 mm or more and 1.8 mm or less. When the thickness of the thermoplastic resin layer is within the above range, impact resistance of the laminate can be significantly improved, and an antiscattering performance can be improved.

Manufacturing Method of Laminate

An example of one aspect of a manufacturing method of a laminate can include a manufacturing method of a laminate in which a laminate for an injection molding including a first acrylic resin layer, a thermoplastic resin layer, and a third acrylic resin layer in this order is manufactured in advance, the laminate for an injection molding is disposed in a mold, and a second acrylic resin layer is molded by injecting a resin composition (2) containing a (meth)acrylic resin on the third acrylic resin layer of the laminate for an injection molding disposed in the mold. When the laminate is manufactured, the obtained laminate contains a third acrylic resin. In this case, in a case where the second acrylic resin layer and the third acrylic resin layer have substantially the same compositions, a clear compositional boundary between these resin layers is not present in the obtained laminate.

The laminate for an injection molding including a first acrylic resin layer, a thermoplastic resin layer, and a third acrylic resin layer in this order can be manufactured using a known molding machine (for example, an extrusion molding machine, a calendar roll molding machine, a press molding machine, an injection molding machine, a transfer molding machine, or the like) under conditions usually used by those skilled in the art. A thickness of the laminate for an injection molding is preferably in a range of 0.1 to 3.0 mm and more preferably in a range of 0.3 to 2.5 mm. When the thickness of the laminate for an injection molding is within the above range, excellent injection molding processability can be obtained.

In the laminate for an injection molding, a thickness of the first acrylic resin layer is preferably 0.1 mm or more and 1.0 mm or less, more preferably 0.2 mm or more and 0.8 mm or less, and still more preferably 0.2 mm or more and 0.5 mm or less. A thickness of the thermoplastic resin layer is preferably 0.05 mm or more and 2.5 mm or less, more preferably 0.1 mm or more and 2.0 mm or less, and still more preferably 0.2 mm or more and 1.8 mm or less. A thickness of the third acrylic resin layer is preferably 0.01 mm or more and 1.0 mm or less, more preferably 0.03 mm or more and 0.5 mm or less, and still more preferably 0.05 mm or more and 0.4 mm or less.

Next, the laminate for an injection molding is disposed in a mold. When the laminate for an injection molding is disposed in the mold, the laminate for an injection molding may be temporarily fixed in the mold. By performing the temporary fixing, the injection molding of the resin composition (2) containing the (meth)acrylic resin can be preferably performed.

Then, a second acrylic resin layer is molded by injecting the resin composition (2) containing the (meth)acrylic resin on the third acrylic resin layer of the laminate for an injection molding disposed in the mold. The resin composition (2) is a resin composition for molding a second acrylic resin layer, and is a resin composition containing the (meth)acrylic resin contained in the second acrylic resin layer.

As the injection molding method, in addition to a normal injection molding method, an ultrahigh-speed injection molding method, an injection compression molding method, a gas-assisted injection molding method, and the like can be used. The injection molding conditions can be appropriately selected depending on each of the injection molding methods. For example, the second acrylic resin layer can be molded by melting the resin composition (2) containing the (meth)acrylic resin and injecting the resin composition (2) into a mold under conditions of a cylinder temperature of 200 to 280°C and a mold temperature of 35 to 85°C.

A thickness of the second acrylic resin layer molded as described above is preferably 0.1 mm or more and 30 mm or less and more preferably 0.5 mm or more and 10 mm or less.

A schematic explanatory view of a laminate that can be manufactured by the injection molding is illustrated in Fig. 2. In the present invention, the configuration of the laminate (for example, a ratio of the thickness of each layer) is not limited to the aspect illustrated in Fig. 2.

An example of another aspect of the manufacturing method of a laminate can include a manufacturing method by extrusion molding in which a melt of a resin composition is discharged from a die. When the laminate is manufactured by this method, the third acrylic resin layer may not be provided.

Examples of the manufacturing method of a laminate by extrusion molding through discharge from a die can include a method including the following steps:

a step of discharging, from a die, a molten resin laminate containing at least a melt of a resin composition (1) containing the (meth)acrylic resin, a melt of a resin composition containing the thermoplastic resin, and a melt of a resin composition (2) containing the (meth)acrylic resin; and
a step of cooling the discharged molten resin laminate to obtain a laminate.

Here, the first acrylic resin layer is formed of a resin composition (1) containing a (meth)acrylic resin, the

thermoplastic resin layer is formed of a resin composition containing a thermoplastic resin, and the second acrylic resin layer is formed of a resin composition (2) containing a (meth)acrylic resin. A laminate including a first acrylic resin layer, a thermoplastic resin layer, and a second acrylic resin layer in this order can be manufactured by these steps.

A discharge temperature of each of the resin composition (1) containing the (meth)acrylic resin and forming the first acrylic resin layer and the resin composition (2) containing the (meth)acrylic resin and forming the second acrylic resin layer can be appropriately selected according to a resin composition, a size of a laminate to be molded, and the like. The discharge temperature may be, for example, 180 to 300°C, more preferably 200 to 290°C, and still more preferably 220 to 280°C. The discharge temperature means a temperature of the melt of the resin composition at a discharge port (or immediately after discharge) of the die.

The melt of the resin composition containing the thermoplastic resin can be discharged from the die in a heated state, if necessary. The discharge temperature may be, for example, 130 to 250°C, more preferably 140 to 230°C, and still more preferably 150 to 200°C.

As a method of discharging, from the die, the molten resin laminate containing at least the melt of the resin composition (1) containing the (meth)acrylic resin, the melt of the resin composition containing the thermoplastic resin, and the melt of the resin composition (2) containing the (meth)acrylic resin, for example, the melt of the resin composition (1), the melt of the resin composition containing the thermoplastic resin, and the melt of the resin composition (2) are each supplied to a three-type three-layer distribution feed block and distributed to have a three-layer structure, and then, the molten resin laminate formed of the melt of the resin composition (1), the melt of the resin composition containing the thermoplastic resin, and the melt of the resin composition (2) containing the (meth)acrylic resin is discharged from a die lip of a multi-manifold die. The discharged molten laminate is cooled by being interposed between a first cooling roll and a second cooling roll and further between the second cooling roll and a third cooling roll, if necessary.

In the laminate that can be manufactured by the extrusion molding, a thickness of first acrylic resin layer is preferably 0.1 mm or more and 1.0 mm or less and more preferably 0.2 mm or more and 0.5 mm or less. A thickness of the thermoplastic resin layer is preferably 0.05 mm or more and 2.5 mm or less and more preferably 0.1 mm or more and 2.0 mm or less. A thickness of the second acrylic resin layer is preferably 0.1 mm or more and 30 mm or less and more preferably 0.5 mm or more and 10 mm or less.

A schematic explanatory view of a laminate that can be manufactured by the extrusion molding is illustrated in Fig. 1. In the present invention, the configuration of the laminate (for example, a ratio of the thickness of each layer) is not limited to the aspect illustrated in Fig. 1.

The laminate can be processed into a desired shape depending on the use thereof. The laminate is useful as, for example, an electron optical material (a material such as a front plate, for example, a display, a cover material, or a light guide plate), a vehicle material (an exterior material such as a glazing, a lamp cover, or an emblem, and an interior material such as a meter panel cover), a building material (a resin glazing material), and materials of various resin base materials.

## EXAMPLES

Hereinafter, the present invention will be described in more detail with reference to Examples, but the present invention is not limited thereto. In Examples, "part(s)" and "%" are on a mass basis unless otherwise specified.

The contents of the respective notations of the first acrylic resin layer, the second acrylic resin layer, and the third acrylic resin layer in the following tables used in the following Examples and Comparative Examples are as follows.

. S000: manufactured by Sumitomo Chemical Co., Ltd., trade name: TECHNOLLOY S000, a methacrylic resin film formed of a methacrylic copolymer containing 100% by mass of a structural unit derived from alkyl methacrylate having an alkyl group having 1 to 4 carbon atoms

The contents of the respective notations of the thermoplastic resin layer in the following tables used in the following Examples and Comparative Examples are as follows.

- 1185N: manufactured by DIC Covestro Polymer Ltd., PANDEX T-1185N (polyurethane resin, 78% of a component having $T_2^H$ of 0.03 ms or longer)
- 8185N: manufactured by DIC Covestro Polymer Ltd., PANDEX T-8185N (polyurethane resin, 78% of a component having $T_2^H$ of 0.03 ms or longer)
- NY80A: manufactured by BASF SE, Elastollan NY80A10 Clear (polyurethane resin, 84% of a component having T2H of 0.03 ms or longer)

Production Example 1 Production of Methacrylic Resin

To a polymerization reactor equipped with a stirrer, a mixture of 97.5 parts by mass of methyl methacrylate and 2.5 parts by mass of methyl acrylate, 0.016 parts by mass of 1,1-di(tert-butylperoxy)cyclohexane, and 0.16 parts by mass of n-octyl mercaptan were continuously fed, and a polymerization reaction was performed at 175°C for 43 minutes of an average retention time. Next, a reaction solution (partial polymer) discharged from the polymerization reactor was preheated and then fed to a devolatilization extruder, and an unreacted monomer component was vaporized and recovered, thereby obtaining a pellet-like methacrylic resin A. In the obtained methacrylic resin A, a content of a monomer unit derived from the methyl methacrylate was 97.5% by mass, a content of a monomer unit derived from the methyl acrylate was 2.5% by mass, and an MFR was 2 g/10 min. A Vicat softening temperature was 109°C. A procedure for measuring the Vicat softening temperature will be described below.

Production Example 2

In a 5 L autoclave equipped with a stirrer, methacrylic acid (hereinafter, referred to as MAA, manufactured by Nippon Shokubai Co., Ltd.) and methyl methacrylate (hereinafter, referred to as MMA) were mixed in 3:97 to obtain a monomer component. To the monomer component, 0.4 parts by mass of lauryl peroxide (manufactured by Kayaku Akzo Corporation, "Laurox K") as a polymerization initiator and 0.4 parts by mass of 1-dodecyl mercaptan as a chain transfer agent were added with respect to 100 parts by mass of the total monomer components, and the mixture was dissolved. Furthermore, 0.060 parts by mass of hydroxyethyl cellulose (hereinafter, referred to as HEC, manufactured by Sansho Co., Ltd., "SANHEC H") as a suspension stabilizer were dissolved in deionized water with respect to 100 parts by mass of the total monomer components to form a suspension polymerization aqueous phase. Then, 150 parts by mass of the aqueous phase were added with respect to 100 parts by mass of the total monomer components, and suspension polymerization was performed. The obtained slurry-like reaction solution was dehydrated and washed twice with 40 L of deionized water using a dehydrator (manufactured by Kokusan Co., Ltd., "Centrifuge H-122"), and then drying was performed, thereby obtaining a bead-like methacrylic polymer composition. The bead-like methacrylic polymer composition was granulated at a screw rotational speed of 80 rpm and a polymer composition temperature of 220°C using a 20 mm vented extruder (ME type Labo Plastomill, manufactured by Toyo Seiki Co., Ltd.) at a throughput of 1.5 kg/Hr to obtain a pellet-like methacrylic polymer composition. An MFR was 2 g/10 min. A Vicat softening temperature was 120°C. A procedure for measuring the Vicat softening temperature will be described below.

Production Example 3

After 50% by weight of the methacrylic resin obtained in Production Example 1 and 50% by weight of a styrenemethyl methacrylate-maleic anhydride copolymer resin (manufactured by Denka Company Limited, RESISFY R200) were mixed with each other, the mixture was melt-kneaded under the following kneading conditions using a single-screw extruder (manufactured by TANABE PLASTICS MACHINERY CO.,LTD., "VS40") having a screw diameter of 40 mm to be extruded into a strand shape, the strand was cooled with water, and the cooled strand was cut with a strand cutter, thereby obtaining a pellet-like methacrylic resin. An MFR was 2 g/10 min. A Vicat softening temperature was 118°C. A procedure for measuring the Vicat softening temperature will be described below.

(Kneading Conditions)

Extruder temperature: In five heaters from a raw material inlet to an outlet, 220°C, 240°C, 245°C, 245°C, and 245°C were set, respectively, from a raw material inlet side.
Rotational speed: 75 rpm

Production Example 4

After 30% by weight of the methacrylic resin obtained in Production Example 1 and 70% by weight of a styrenemethyl methacrylate-maleic anhydride copolymer resin (manufactured by Denka Company Limited, RESISFY R310) were mixed with each other, the mixture was melt-kneaded under the following kneading conditions using a single-screw extruder (manufactured by TANABE PLASTICS MACHINERY CO.,LTD., "VS40") having a screw diameter of 40 mm to be extruded into a strand shape, the strand was cooled with water, and the cooled strand was cut with a strand cutter, thereby obtaining a pellet-like methacrylic resin. An MFR was 2 g/10 min. A Vicat softening temperature was 131°C. A procedure for measuring the Vicat softening temperature will be described below.

(Kneading Conditions)

Extruder temperature: In five heaters from a raw material inlet to an outlet, 220°C, 240°C, 245°C, 245°C, and 245°C were set, respectively, from a raw material inlet side.
Rotational speed: 75 rpm

Production Example 5

In a 5 L autoclave equipped with a stirrer, methacrylic acid (hereinafter, referred to as MAA, manufactured by Nippon Shokubai Co., Ltd.) and methyl methacrylate (hereinafter, referred to as MMA) were mixed in 7.5:92.5 to obtain a monomer component. To the monomer component, 0.65 parts by mass of lauryl peroxide (manufactured by Kayaku Akzo Corporation, "Laurox K") as a polymerization initiator and 0.5 parts by mass of 1-dodecyl mercaptan as a chain transfer agent were added with respect to 100 parts by mass of the total monomer components, and the mixture was dissolved. Furthermore, 0.060 parts by mass of hydroxyethyl cellulose (hereinafter, referred to as HEC, manufactured by Sansho Co., Ltd., "SANHEC H") as a suspension stabilizer were dissolved in deionized water with respect to 100 parts by mass of the total monomer components to form a suspension polymerization aqueous phase. Then, 150 parts by mass of the aqueous phase were added with respect to 100 parts by mass of the total monomer components, and suspension polymerization was performed. The obtained slurry-like reaction solution was dehydrated and washed twice with 40 L of deionized water using a dehydrator (manufactured by Kokusan Co., Ltd., "Centrifuge H-122"), and then drying was performed, thereby obtaining a bead-like methacrylic polymer composition. The bead-like methacrylic polymer composition was granulated at a screw rotational speed of 80 rpm and a polymer composition temperature of 220°C using a 20 mm vented extruder (ME type Labo Plastomill, manufactured by Toyo Seiki Co., Ltd.) at a throughput of 1.5 kg/Hr to obtain a pellet-like methacrylic polymer composition. An MFR was 5 g/10 min. A Vicat softening temperature was 121°C. A procedure for measuring the Vicat softening temperature will be described below.

Example 1 Manufacturing of Laminate

Manufacturing of Laminate for an injection molding Including First Acrylic Resin Layer, Thermoplastic Resin Layer, and Third Acrylic Resin Layer

1185N as a thermoplastic resin was placed in a frame mold having a thickness of 1 mm, and preheating was performed at a temperature of 180°C for 5 minutes. Next, pressing was performed at a pressure of 2 MPa for 3 minutes, and pressing was further performed at a pressure of 12 MPa for 1 minute, thereby molding a thermoplastic resin layer. Thereafter, pressing was performed at room temperature for cooling at a pressure of 2 MPa for 1 minute to obtain a sheet-shaped thermoplastic resin layer.

The sheet-shaped thermoplastic resin layer obtained as described above was interposed between a methacrylic resin film (manufactured by Sumitomo Chemical Co., Ltd., trade name: TECHNOLLOY S000, a methacrylic copolymer containing 100% by mass of a structural unit derived from alkyl methacrylate having an alkyl group having 1 to 4 carbon atoms, constituting the first acrylic resin layer) having a thickness of 0.3 mm and a methacrylic resin film (manufactured by Sumitomo Chemical Co., Ltd., trade name: TECHNOLLOY S000, a resin composition is the same as described above, constituting the third acrylic resin layer) having a thickness of 0.1 mm.

Preheating was performed at a temperature of 145°C for 30 seconds, pressing was performed at a pressure of 1 MPa for 30 seconds, pressing was performed at a pressure of 2 MPa for 1 minute, and then, pressing was performed at a pressure of 12 MPa for 1 minute to perform molding.

Thereafter, pressing was performed at room temperature for cooling at a pressure of 2 MPa for 1 minute to obtain a laminate for an injection molding.

In the obtained laminate for an injection molding, a thickness of the first acrylic resin layer was 0.3 mm, a thickness of the thermoplastic resin layer was 0.6 mm, and a thickness of the third acrylic resin layer was 0.1 mm.

Manufacturing of Laminate

The laminate for an injection molding obtained as described above was cut into a rectangle of 105 mm × 95 mm. A surface of the first acrylic resin layer of the obtained sample was attached to a mold having a thickness of 120 mm × 100 mm × 3 mm with a double-sided tape.

A resin composition (2) containing the methacrylic resin obtained in Production Example 2 was injection-molding on the third acrylic resin layer of the laminate for an injection molding at a cylinder temperature of 250°C to obtain a

laminate including a first acrylic resin layer, a thermoplastic resin layer, a third acrylic resin layer, and a second acrylic resin layer and having a total thickness of 3 mm.

A Vicat softening temperature of the (meth)acrylic resin constituting the second acrylic resin layer was determined according to the following procedure.

<Measurement of Vicat Softening Temperature>

The methacrylic resin obtained in each of Production Example 1 and Production Example 2 was injection-molded at a cylinder temperature of 250°C to prepare a molded piece having a thickness of 3 mm and a 5 cm square. The obtained test piece was annealed at 83°C for the methacrylic resin of Production Example 1 and at 91°C for the methacrylic resin of Production Example 2, respectively, for 16 hours, and then the Vicat softening temperature was measured according to the B50 method specified in JIS K 7206:2016 "Plastics-Thermoplastic materials-Determination of Vicat softening temperature (VST)".

Measurement of a spin-spin relaxation time $T_2^H$ in pulse NMR measurement of the thermoplastic resin layer was performed according to the following procedure.

<Measurement of Pulse NMR of Hydrogen 1>

A relaxation time $T_2^H$ and a component fraction $R_n$ were calculated by fitting according to Equation (F1), with respect to a signal intensity $I(\tau)$ obtained using a pulse NMR apparatus. The pulse NMR measurement is performed using the Solid Echo method, and the measurement conditions are as follows. As the sample, a sheet-shaped thermoplastic resin was used.

Measurement apparatus: minispec mq20 (manufactured by Bruker Corporation)
Nuclide: Hydrogen 1 (20 MHz)
Magnetostatic field intensity: 0.47 tesla
Repetition time: 3 seconds
Integration times: 128 times
Temperature: 23.5°C

Example 2

A laminate was prepared in the same manner as that of Example 1 except that the laminate for an injection molding obtained in Example 1 was attached to a mold of 120 mm × 100 mm × 5 mm and a laminate having a total thickness of 5 mm was obtained. The thicknesses of the respective layers are shown in the following table.

Example 3

A laminate was prepared in the same manner as that of Example 1 except that 8185N was used as the thermoplastic resin, the obtained laminate for an injection molding was attached to a mold of 120 mm × 100 mm × 4 mm, and a laminate having a total thickness of 4 mm was obtained in the preparation of the laminate for an injection molding. The thicknesses of the respective layers are shown in the following table.

Example 4

1185N as a thermoplastic resin was placed in a frame mold having a thickness of 2 mm, and preheating was performed at a temperature of 180°C for 5 minutes. Next, pressing was performed at a pressure of 2 MPa for 3 minutes, and pressing was further performed at a pressure of 12 MPa for 1 minute, thereby molding a thermoplastic resin layer. Thereafter, pressing was performed at room temperature for cooling at a pressure of 2 MPa for 1 minute to obtain a sheet-shaped thermoplastic resin layer.

The sheet-shaped thermoplastic resin layer obtained as described above was interposed between a methacrylic resin film (manufactured by Sumitomo Chemical Co., Ltd., trade name: TECHNOLLOY S000, a methacrylic copolymer containing 100% by mass of a structural unit derived from alkyl methacrylate having an alkyl group having 1 to 4 carbon atoms, constituting the first acrylic resin layer) having a thickness of 0.3 mm and a methacrylic resin film (manufactured by Sumitomo Chemical Co., Ltd., trade name: TECHNOLLOY S000, a resin composition is the same as described above, constituting the third acrylic resin layer) having a thickness of 0.1 mm.

Preheating was performed at a temperature of 145°C for 30 seconds, pressing was performed at a pressure

of 1 MPa for 30 seconds, pressing was performed at a pressure of 2 MPa for 1 minute, and then, pressing was performed at a pressure of 12 MPa for 1 minute to perform molding.

Thereafter, pressing was performed at room temperature for cooling at a pressure of 2 MPa for 1 minute to obtain a laminate for an injection molding.

The laminate for an injection molding obtained as described above was cut into a rectangle of 105 mm × 95 mm. A surface of the first acrylic resin layer of the obtained sample was attached to a mold having a thickness of 120 mm × 100 mm × 4 mm with a double-sided tape.

A resin composition (2) containing the methacrylic resin obtained in Production Example 2 was injection-molding on the third acrylic resin layer of the laminate for an injection molding at a cylinder temperature of 250°C to obtain a laminate including a first acrylic resin layer, a thermoplastic resin layer, a third acrylic resin layer, and a second acrylic resin layer and having a total thickness of 4 mm. The thicknesses of the respective layers are shown in the following table.

Example 5

A laminate was prepared in the same manner as that of Example 4 except that the laminate for an injection molding obtained in Example 4 was attached to a mold of 120 mm × 100 mm × 5 mm and a laminate having a total thickness of 5 mm was obtained. The thicknesses of the respective layers are shown in the following table.

Example 6

8185N as a thermoplastic resin was placed in a frame mold having a thickness of 2 mm, and preheating was performed at a temperature of 180°C for 5 minutes. Next, pressing was performed at a pressure of 2 MPa for 3 minutes, and pressing was further performed at a pressure of 12 MPa for 1 minute, thereby molding a thermoplastic resin layer. Thereafter, pressing was performed at room temperature for cooling at a pressure of 2 MPa for 1 minute to obtain a sheet-shaped thermoplastic resin layer.

The sheet-shaped thermoplastic resin layer obtained as described above was interposed between a methacrylic resin film (manufactured by Sumitomo Chemical Co., Ltd., trade name: TECHNOLLOY S000, a methacrylic copolymer containing 100% by mass of a structural unit derived from alkyl methacrylate having an alkyl group having 1 to 4 carbon atoms, constituting the first acrylic resin layer) having a thickness of 0.3 mm and a methacrylic resin film (manufactured by Sumitomo Chemical Co., Ltd., trade name: TECHNOLLOY S000, a resin composition is the same as described above, constituting the third acrylic resin layer) having a thickness of 0.1 mm.

Preheating was performed at a temperature of 145°C for 30 seconds, pressing was performed at a pressure of 1 MPa for 30 seconds, pressing was performed at a pressure of 2 MPa for 1 minute, and then, pressing was performed at a pressure of 12 MPa for 1 minute to perform molding.

Thereafter, pressing was performed at room temperature for cooling at a pressure of 2 MPa for 1 minute to obtain a laminate for an injection molding.

The laminate for an injection molding obtained as described above was cut into a rectangle of 105 mm × 95 mm. A surface of the first acrylic resin layer of the obtained sample was attached to a mold having a thickness of 120 mm × 100 mm × 4 mm with a double-sided tape.

The methacrylic resin composition obtained in Production Example 2 was injection-molding on the third acrylic resin layer of the laminate for an injection molding at a cylinder temperature of 250°C to obtain a laminate including a first acrylic resin layer, a thermoplastic resin layer, a third acrylic resin layer, and a second acrylic resin layer and having a total thickness of 4 mm. The thicknesses of the respective layers are shown in the following table.

Example 7

According to Example 3, alaminate for an injection molding was prepared using 8185N as the thermoplastic resin. In the obtained laminate for an injection molding, a thickness of the first acrylic resin layer was 0.3 mm, a thickness of the thermoplastic resin layer was 1.0 mm, and a thickness of the third acrylic resin layer was 0.1 mm.

A laminate was prepared in the same manner as that of Example 3 except that injection molding was performed using the methacrylic resin composition obtained in Production Example 3 instead of the methacrylic resin composition obtained in Production Example 2. The thicknesses of the respective layers are shown in the following table.

Example 8

A laminate was prepared in the same manner as that of Example 7 except that injection molding was performed using the methacrylic resin composition obtained in Production Example 4 instead of the methacrylic resin composition obtained in Production Example 3. The thicknesses of the respective layers are shown in the following table.

Comparative Example 1

A laminate was prepared in the same manner as that of Example 1 except that injection molding was performed using the methacrylic resin composition obtained in Production Example 1 instead of the methacrylic resin composition obtained in Production Example 2. The thicknesses of the respective layers are shown in the following table.

Comparative Example 2

A laminate was prepared in the same manner as that of Example 1 except that injection molding was performed using the methacrylic resin composition obtained in Production Example 1 instead of the methacrylic resin composition obtained in Production Example 2 and the thickness of the second acrylic resin layer was changed to 3 mm. The thicknesses of the respective layers are shown in the following table.

Comparative Example 3

A laminate was prepared in the same manner as that of Example 2 except that injection molding was performed using the methacrylic resin composition obtained in Production Example 1 instead of the methacrylic resin composition obtained in Production Example 2. The thicknesses of the respective layers are shown in the following table.

Comparative Example 4

A laminate was prepared in the same manner as that of Example 3 except that injection molding was performed using the methacrylic resin composition obtained in Production Example 1 instead of the methacrylic resin composition obtained in Production Example 2. The thicknesses of the respective layers are shown in the following table.

Comparative Example 5

A laminate was prepared in the same manner as that of Example 4 except that injection molding was performed using the methacrylic resin composition obtained in Production Example 1 instead of the methacrylic resin composition obtained in Production Example 2. The thicknesses of the respective layers are shown in the following table.

Comparative Example 6

A laminate was prepared in the same manner as that of Example 6 except that injection molding was performed using the methacrylic resin composition obtained in Production Example 1 instead of the methacrylic resin composition obtained in Production Example 2. The thicknesses of the respective layers are shown in the following table.

Example 9

A polyurethane resin (NY80A) was melt-kneaded at 170°C using a single-screw extruder having a screw diameter of 40 mm, and the methacrylic resin obtained in Production Example 5 was melt-kneaded at 230°C using a single-screw extruder having a screw diameter of 25 mm. Both the melts were formed into three layers so that both surface layers were formed of a methacrylic resin via a T die set at 210°C, extrusion was performed, and then cooling was performed so that both surfaces were completely in contact with a polishing roll, thereby obtaining a two-type three-layer resin sheet in which a methacrylic resin layer was laminated on each of both surfaces of a polyurethane resin. A total thickness of the resin sheet was 2.9 mm, a thickness of the thermoplastic resin layer was 1.0 mm, a thickness of the first acrylic resin layer was 0.3 mm, and a thickness of the second acrylic resin layer was 1.6 mm.

Comparative Example 7

A polyurethane resin (NY80A) was melt-kneaded at 170°C using a single-screw extruder having a screw diameter of 40 mm, and a methacrylic resin (manufactured by Sumitomo Chemical Co., Ltd., SUMIPEX MH5, MFR: 5 g/10 min, Vicat softening temperature: 111°C) was melt-kneaded at 230°C using a single-screw extruder having a screw diameter of 25 mm. Both the melts were formed into three layers so that both surface layers were formed of a methacrylic resin via a T die set at 210°C, extrusion was performed, and then cooling was performed so that both surfaces were completely in contact with a polishing roll, thereby obtaining a two-type three-layer resin sheet in which a methacrylic resin layer was laminated on each of both surfaces of a polyurethane resin. A total thickness of the resin sheet was 2.4 mm, a thickness of the thermoplastic resin layer was 0.4 mm, a thickness of the first acrylic resin layer was 0.5 mm, and

a thickness of the second acrylic resin layer was 1.5 mm.

The following evaluation was performed using the laminate obtained in each of Examples and Comparative Examples. The evaluation results are shown in the following table.

Impact Resistance Evaluation (-30°C)

The laminate obtained in each of Examples and Comparative Examples was cut into a size of 10 cm × 10 cm to prepare a plate-shaped test piece.

The test piece was fixed by being interposed between pressing plates so that the central portion of the prepared test piece was positioned at the center of a hole having a diameter of 3 cm with respect to a test piece support stand having a hole having a diameter of 3 cm.

The fixed test piece was allowed to stand under a condition of a temperature of -30°C for 3 hours. Thereafter, a punching speed of 5 m/sec was selected as a reference speed, an impact was applied to the central portion of the second acrylic resin layer of the test piece according to ASTM-D3763 using a striker having a hemispherical tip with a diameter of 1/2 inches.

The state of the test piece (impact site) after the impact test was visually evaluated based on the following criteria.

◦: Although the impact site was cracked, the striker was not penetrated, and no hole was made in the impact surface.

×: The impact site was cracked, the striker was penetrated, and a hole was formed in the impact surface.

Further, the number of fragments detached from the impact site was counted, and the average weight (g) of the fragments was determined. The results are shown in the following table.

◦: The surface area of the fragment cracked and/or peeled off from the impact site was small, and the average weight was 0.05 g or less.

×: The average weight of the fragments cracked and/or peeled off from the impact site was more than 0.05 g.

[Table 1]

| | Example 1 | Example 2 | Example 3 | Example 4 | Example 5 | Example 6 |
|---|---|---|---|---|---|---|
| First Acrylic Resin Layer | S000 | S000 | S000 | S000 | 5000 | 5000 |
| Thickness of first acrylic resin layer (mm) | 0.3 | 0.3 | 0.3 | 0.3 | 0.3 | 0.3 |
| Thermoplastic Resin Layer | 1185N | 1185N | 8185N | 1185N | 1185N | 8185N |
| Thickness of thermoplastic resin layer (mm) | 0.6 | 0.6 | 0.6 | 1.6 | 1.6 | 1.4 |
| Third Acrylic Resin Layer | S000 | S000 | S000 | S000 | 5000 | 5000 |
| Thickness of third acrylic resin layer (mm) | 0.1 | 0.1 | 0.1 | 0.1 | 0.1 | 0.1 |
| Second Acrylic Resin Layer | Production Example 2 | Production Example 2 | Production Example 2 | Production Example 2 | Production Example 2 | Production Example 2 |
| Thickness of second acrylic resin layer (mm) | 2 | 4 | 3 | 2 | 3 | 2.2 |
| Vicat softening temperature (°C) of second acrylic resin layer | 120 | 120 | 120 | 120 | 120 | 120 |
| T1:(T2 + T3) | 1: 7 | 1:13.7 | 1:10.3 | 1:7 | 1:10.3 | 1:7.7 |

(continued)

| Second Acrylic Resin Layer | Production Example 2 | Production Example 2 | Production Example 2 | Production Example 2 | Production Example 2 | Production Example 2 |
|---|---|---|---|---|---|---|
| Impact resistance evaluation (-30°C), crack evaluation at impact site | ○ | ○ | ○ | ○ | ○ | ○ |
| Number of detached fragments (pieces) | 11 | 20 | 20 | 10 | 20 | 10 |
| Weight of detached fragments (g) | 0.03 | 0.04 | 0.05 | 0.05 | 0.03 | 0.03 |
| Evaluation of detached fragments | ○ | ○ | ○ | ○ | ○ | ○ |

[Table 2]

| | Comparative Example 1 | Comparative Example 2 | Comparative Example 3 | Comparative Example 4 | Comparative Example 5 | Comparative Example 6 |
|---|---|---|---|---|---|---|
| First Acrylic Resin Layer | S000 | S000 | S000 | S000 | 5000 | 5000 |
| Thickness of first acrylic resin layer (mm) | 0.3 | 0.3 | 0.3 | 0.3 | 0.3 | 0.3 |
| Thermoplastic Resin Layer | 1185N | 1185N | 1185N | 8185N | 1185N | 8185N |
| Thickness of thermoplastic resin layer (mm) | 0.6 | 0.6 | 0.6 | 0.6 | 1.6 | 1.4 |
| Third Acrylic Resin Layer | S000 | S000 | S000 | S000 | 5000 | 5000 |
| Thickness of third acrylic resin layer (mm) | 0.1 | 0.1 | 0.1 | 0.1 | 0.1 | 0.1 |
| Second Acrylic Resin Layer | Production Example 1 | Production Example 1 | Production Example 1 | Production Example 1 | Production Example 1 | Production Example 1 |
| Thickness of second acrylic resin layer (mm) | 2 | 3 | 4 | 3 | 2 | 2.2 |
| Vicat softening temperature (°C) of second acrylic resin layer | 109 | 109 | 109 | 109 | 109 | 109 |
| T1:(T2 + T3) | 1: 7 | 1:10.3 | 1:13.7 | 1:10.3 | 1:7 | 1:7.7 |

(continued)

| | Comparative Example 1 | Comparative Example 2 | Comparative Example 3 | Comparative Example 4 | Comparative Example 5 | Comparative Example 6 |
|---|---|---|---|---|---|---|
| Impact resistance evaluation (-30°C), crack evaluation at impact site | ○ | ○ | ○ | ○ | ○ | ○ |
| Number of detached fragments (pieces) | 5 | 15 | 8 | 7 | 9 | 10 |
| Weight of detached fragments (g) | 0.26 | 0.1 | 0.35 | 0.14 | 0.08 | 0.09 |
| Evaluation of detached fragments | × | × | × | × | × | × |

[Table 3]

| | Example 7 | Example 8 | Example 9 | Comparative Example 7 |
|---|---|---|---|---|
| First Acrylic Resin Layer | S000 | 5000 | Production Example 5 | MH5 |
| Thickness of first acrylic resin layer (mm) | 0.3 | 0.3 | 0.3 | 0.5 |
| Thermoplastic Resin Layer | 8185N | 8185N | NY80A | NY80A |
| Thickness of thermoplastic resin layer (mm) | 1 | 1 | 1 | 0.4 |
| Third Acrylic Resin Layer | 5000 | 5000 | - | - |
| Thickness of third acrylic resin layer (mm) | 0.1 | 0.1 | 0 | 0 |
| Second Acrylic Resin Layer | Production Example 3 | Production Example 4 | Production Example 5 | MH5 |
| Thickness of second acrylic resin layer (mm) | 2.6 | 2.6 | 1.6 | 1.5 |
| Vicat softening temperature (°C) of second acrylic resin layer | 118 | 131 | 121 | 111 |
| T1:(T2 + T3) | 1:9 | 1:9 | 1:5.3 | 1:3 |
| Impact resistance evaluation (-30°C), crack evaluation at impact site | ○ | ○ | ○ | ○ |
| Number of detached fragments (pieces) | 18 | 14 | 11 | 11 |
| Weight of detached fragments (g) | 0.01 | 0.02 | 0.01 | 0.09 |
| Evaluation of detached fragments | ○ | ○ | ○ | × |

It was confirmed that in all of the laminates obtained in Examples, the impact resistance was excellent even under low-temperature conditions. In particular, it was confirmed in the impact resistance evaluation that when the Vicat

softening temperature of the (meth)acrylic resin contained in the second acrylic resin layer was 115°C or higher and 145°C or lower, the surface area of the fragment falling due to cracking and peeling at the impact site was significantly reduced. Due to a small surface area and weight of the fragment, for example, in a case where the laminate is used as a resin glazing, there is an advantage that it is possible to reduce a risk that peripheral equipment and/or a human body may be damaged by scattered fragments directly hitting the peripheral equipment and/or the human body when the fragments are generated by an impact.

Comparative Examples 1 to 7 are examples in which the Vicat softening temperature of the (meth)acrylic resin contained in the second acrylic resin layer is lower than 115°C. In these examples, although no hole was made in the impact surface, it was confirmed that the weight of the detached fragment was more than 0.05 g.

INDUSTRIAL APPLICABILITY

The resin laminate has an advantage that impact resistance, in particular, impact resistance under a low-temperature condition is excellent. The resin laminate can be preferably used as, for example, a resin glazing material.

DESCRIPTION OF REFERENCE SIGNS

| | |
|---|---|
| 1 | Laminate |
| 10 | First Acrylic Resin Layer |
| 12 | Second Acrylic Resin Layer |
| 14 | Thermoplastic Resin Layer |
| 16 | Third Acrylic Resin Layer |

**Claims**

1. A laminate comprising a first acrylic resin layer, a thermoplastic resin layer, and a second acrylic resin layer in this order,

   wherein a ratio $[T_1:T_2]$ of a thickness $T_1$ of the first acrylic resin layer to a thickness $T_2$ of the second acrylic resin layer is within a range of 1:1.9 to 1:29, and
   the second acrylic resin layer is formed of a (meth)acrylic resin having a Vicat softening temperature of 115°C or higher and 145°C or lower, as measured with a method described in the description.

2. The laminate according to claim 1, wherein the (meth)acrylic resin having a Vicat softening temperature of 115°C or higher and 145°C or lower is
   a copolymer (A) having a ring structural unit (a1) having a 5- or 6-membered ring structure and a monomer unit (a2) other than the ring structural unit.

3. The laminate according to claim 2, wherein the ring structural unit (a1) having a 5- or 6-membered ring structure is one or more selected from the group consisting of a glutaric anhydride structural unit, a maleic anhydride structural unit, a maleimide structural unit, a glutarimide structural unit, and a lactone structural unit.

4. The laminate according to any one of claims 1 to 3, wherein the thermoplastic resin layer contains 71% or more of a component having a spin-spin relaxation time $T_2^H$ in pulse NMR measurement of 0.03 ms or longer, as measured with a method described in the description.

5. The laminate according to any one of claims 1 to 4, further comprising a third acrylic resin layer,
   wherein the third acrylic resin layer is provided between the second acrylic resin layer and the thermoplastic resin layer.

6. The laminate according to any one of claims 1 to 5, wherein the first acrylic resin layer is formed of a (meth)acrylic resin having a Vicat softening temperature of 115°C or higher and 145°C or lower, as measured with a method described in the description.

7. The laminate according to claim 5 or 6, wherein a ratio $[T_1:(T_2 + T_3)]$ of a thickness $T_1$ of the first acrylic resin layer

to the sum of a thickness $T_2$ of the second acrylic resin layer and a thickness $T_3$ of the third acrylic resin layer is within a range of $T_1:(T_2 + T_3)$ = 1:2 to 1:30.

**8.** The laminate according to any one of claims 1 to 7, wherein a thermoplastic resin constituting the thermoplastic resin layer is one or more selected from the group consisting of a polyurethane resin, a polyvinyl acetal resin, an ethylene-methyl methacrylate copolymer resin, and an ethylene-vinyl acetate copolymer resin.

**9.** A manufacturing method of a laminate including either

a) a first acrylic resin layer, a thermoplastic resin layer, a third acrylic resin layer, and a second acrylic resin layer in this order, the method comprising:

disposing a laminate for an injection molding including the first acrylic resin layer, the thermoplastic resin layer, and the third acrylic resin layer in this order in a mold; and
molding a second acrylic resin layer by injecting a resin composition (2) containing a (meth)acrylic resin on the third acrylic resin layer of the laminate for an injection molding disposed in the mold,
wherein the (meth)acrylic resin has a Vicat softening temperature of 115°C or higher and 145°C or lower, as measure with a method described in the description, or

b) a first acrylic resin layer formed of a resin composition (1) containing a (meth)acrylic resin, a thermoplastic resin layer formed of a resin composition containing a thermoplastic resin, and a second acrylic resin layer formed of a resin composition (2) containing a (meth)acrylic resin in this order, the method comprising:

discharging, from a die, a molten resin laminate containing at least a melt of the resin composition (1) containing the (meth)acrylic resin, a melt of the resin composition containing the thermoplastic resin, and a melt of the resin composition (2) containing the (meth)acrylic resin; and
cooling the discharged molten resin laminate to obtain a laminate,
wherein the (meth)acrylic resin contained in the resin composition (2) has a Vicat softening temperature of 115°C or higher and 145°C or lower, as measure with a method described in the description.

**10.** The manufacturing method according to claim 9,
wherein the thermoplastic resin layer contains 71% or more of a component having a spin-spin relaxation time $T_2^H$ in pulse NMR measurement of 0.03 ms or longer, as measure with a method described in the description.

**Patentansprüche**

**1.** Schichtstoff, eine erste Acrylharzschicht, eine thermoplastische Harzschicht und eine zweite Acrylharzschicht in dieser Reihenfolge umfassend,

wobei ein Verhältnis $[T_1:T_2]$ einer Dicke $T_1$ der ersten Acrylharzschicht zu einer Dicke $T_2$ der zweiten Acrylharzschicht innerhalb eines Bereichs von 1:1,9 bis 1:29 liegt, und
wobei die zweite Acrylharzschicht aus einem (Meth)acrylharz mit einer Vicat-Erweichungstemperatur von 115 °C oder höher und 145 °C oder niedriger, wie mit einem in der Beschreibung beschriebenen Verfahren gemessen, gebildet ist.

**2.** Schichtstoff nach Anspruch 1, wobei das (Meth)acrylharz mit einer Vicat-Erweichungstemperatur von 115 °C oder höher und 145 °C oder niedriger ein Copolymer (A) ist, das eine Ringstruktureinheit (a1) mit einer 5- oder 6-gliedrigen Ringstruktur und eine andere Monomereinheit (a2) als die Ringstruktureinheit aufweist.

**3.** Schichtstoff nach Anspruch 2, wobei die Ringstruktureinheit (a1) mit einer 5- oder 6-gliedrigen Ringstruktur eine oder mehr aus der Gruppe ist, die aus Folgendem besteht: eine Glutarsäureanhydrid-Struktureinheit, einer Maleinsäureanhydrid-Struktureinheit, eine Maleimid-Struktureinheit, eine Glutarimid-Struktureinheit und eine Lacton-Struktureinheit.

**4.** Schichtstoff nach einem der Ansprüche 1 bis 3, wobei die thermoplastische Harzschicht 71% oder mehr von einer Komponente mit einer Spin-Spin-Relaxationszeit $T_2^H$ bei der Impuls-NMR-Messung von 0,03 ms oder länger, wie mit einem in der Beschreibung beschriebenen Verfahren gemessen, enthält.

5. Schichtstoff nach einem der Ansprüche 1 bis 4, ferner eine dritte Acrylharzschicht umfassend, wobei die dritte Acrylharzschicht zwischen der zweiten Acrylharzschicht und der thermoplastischen Harzschicht bereitgestellt ist.

6. Schichtstoff nach einem der Ansprüche 1 bis 5, wobei die erste Acrylharzschicht aus einem (Meth)acrylharz mit einer Vicat-Erweichungstemperatur von 115 °C oder höher und 145 °C oder niedriger, wie mit einem in der Beschreibung beschriebenen Verfahren gemessen, gebildet ist.

7. Schichtstoff nach Anspruch 5 oder 6, wobei ein Verhältnis $[T_1:(T_2 + T_3)]$ einer Dicke $T_1$ der ersten Acrylharzschicht zur Summe aus einer Dicke $T_2$ der zweiten Acrylharzschicht und einer Dicke $T_3$ der dritten Acrylharzschicht innerhalb eines Bereichs von $T_1:(T_2 + T_3)$ = 1:2 bis 1:30 liegt.

8. Schichtstoff nach einem der Ansprüche 1 bis 7, wobei ein Thermoplastharz, das die thermoplastische Harzschicht bildet, eines oder mehr aus der Gruppe ist, die aus Folgendem besteht: ein Polyurethanharz, ein Polyvinylacetalharz, ein Ethylen-Methylmethacrylat-Copolymerharz und ein Ethylen-Vinylacetat-Copolymerharz.

9. Herstellungsverfahren für einen Schichtstoff, der entweder einschließt:

a) eine erste Acrylharzschicht, eine thermoplastische Harzschicht, eine dritte Acrylharzschicht und eine zweite Acrylharzschicht in dieser Reihenfolge, wobei das Verfahren umfasst:

Anordnen eines Schichtstoffs zum Spritzgießen, das die erste Acrylharzschicht, die thermoplastische Harzschicht und die dritte Acrylharzschicht in dieser Reihenfolge einschließt, in einer Form; und
Formen einer zweiten Acrylharzschicht durch Einspritzen einer Harzzusammensetzung (2), die ein (Meth)acrylharz enthält, auf die dritte Acrylharzschicht des Schichtstoffs zum Spritzgießen, das in der Form angeordnet ist,
wobei das (Meth)acrylharz eine Vicat-Erweichungstemperatur von 115 °C oder höher und 145 °C oder niedriger, wie mit einem in der Beschreibung beschriebenen Verfahren gemessen, aufweist, oder

b) eine erste Acrylharzschicht, die aus einer Harzzusammensetzung (1) gebildet ist, die ein (Meth)acrylharz enthält, eine thermoplastische Harzschicht, die aus einer Harzzusammensetzung gebildet ist, die ein Thermoplastharz enthält, und eine zweite Acrylharzschicht, die aus einer Harzzusammensetzung (2) gebildet ist, die ein (Meth)acrylharz enthält, und zwar in dieser Reihenfolge, wobei das Verfahren umfasst:

Abgeben eines geschmolzenen Harzschichtstoffs aus einer Düse, das mindestens eine Schmelze der das (Meth)acrylharz enthaltenden Harzzusammensetzung (1), eine Schmelze der das Thermoplastharz enthaltenden Harzzusammensetzung und eine Schmelze der das (Meth)acrylharz enthaltenden Harzzusammensetzung (2) enthält; und
Abkühlen des ausgestoßenen geschmolzenen Harzschichtstoffs, um einen Schichtstoff zu erlangen,
wobei das in der Harzzusammensetzung (2) enthaltene (Meth)acrylharz eine Vicat-Erweichungstemperatur von 115 °C oder höher und 145 °C oder niedriger, wie mit einem in der Beschreibung beschriebenen Verfahren gemessen, aufweist.

10. Herstellungsverfahren nach Anspruch 9, wobei die thermoplastische Harzschicht 71% oder mehr von einer Komponente mit einer Spin-Spin-Relaxationszeit $T_2^H$ bei der Impuls-NMR-Messung von 0,03 ms oder länger, wie mit einem in der Beschreibung beschriebenen Verfahren gemessen, enthält.

## Revendications

1. Stratifié comprenant une première couche de résine acrylique, une couche de résine thermoplastique et une deuxième couche de résine acrylique dans cet ordre,

dans lequel un rapport $[T_1: T_2]$ d'une épaisseur $T_1$ de la première couche de résine acrylique sur une épaisseur $T_2$ de la deuxième couche de résine acrylique se situe dans une plage de 1:1,9 à 1:29, et
la deuxième couche de résine acrylique est formée à partir d'une résine (méth)acrylique présentant une température de ramollissement Vicat de 115 °C ou plus et de 145 °C ou moins, telle que mesurée à l'aide d'un procédé décrit dans la description.

**2.** Stratifié selon la revendication 1, dans lequel la résine (méth)acrylique présentant une température de ramollissement Vicat de 115 °C ou plus et de 145 °C ou moins est un copolymère (A) comportant une unité structurelle cyclique (a1) présentant une structure cyclique à 5 ou 6 chaînons et une unité de monomère (a2) autre que l'unité structurelle cyclique.

**3.** Stratifié selon la revendication 2, dans lequel l'unité structurelle cyclique (a1) présentant une structure cyclique à 5 ou 6 chaînons est une ou plusieurs unités sélectionnées parmi le groupe constitué par une unité structurelle anhydride glutarique, une unité structurelle anhydride maléique, une unité structurelle maléimide, une unité structurelle glutarinide et une unité structurelle lactone.

**4.** Stratifié selon l'une quelconque des revendications 1 à 3, dans lequel la couche de résine thermoplastique contient 71 % ou plus d'un composant présentant un temps de relaxation transversale $T_2^H$ lors d'une mesure RMN impulsionnelle de 0,03 ms ou plus, tel que mesuré à l'aide d'un procédé décrit dans la description.

**5.** Stratifié selon l'une quelconque des revendications 1 à 4, comprenant en outre une troisième couche de résine acrylique,
dans lequel la troisième couche de résine acrylique est fournie entre la deuxième couche de résine acrylique et la couche de résine thermoplastique.

**6.** Stratifié selon l'une quelconque des revendications 1 à 5, dans lequel la première couche de résine acrylique est formée à partir d'une résine (méth)acrylique présentant une température de ramollissement Vicat de 115 °C ou plus et de 145 °C ou moins, telle que mesurée à l'aide d'un procédé décrit dans la description.

**7.** Stratifié selon la revendication 5 ou 6, dans lequel un rapport $[T_1:(T_2 + T_3)]$ d'une épaisseur $T_1$ de la première couche de résine acrylique sur la somme d'une épaisseur $T_2$ de la deuxième couche de résine acrylique et d'une épaisseur $T_3$ de la troisième couche de résine acrylique se situe dans une plage de $T_1:(T_2 + T_3)$ = 1:2 à 1:30.

**8.** Stratifié selon l'une quelconque des revendications 1 à 7, dans lequel une résine thermoplastique constituant la couche de résine thermoplastique est une ou plusieurs résines sélectionnées parmi le groupe constitué par une résine polyuréthane, une résine acétal polyvinylique, une résine de copolymère éthylène-méthacrylate de méthyle et une résine de copolymère éthylène-acétate de vinyle.

**9.** Procédé de fabrication d'un stratifié incluant soit

a) une première couche de résine acrylique, une couche de résine thermoplastique, une troisième couche de résine acrylique et une deuxième couche de résine acrylique dans cet ordre, le procédé comprenant :

la disposition d'un stratifié pour un moulage par injection incluant la première couche de résine acrylique, la couche de résine thermoplastique et la troisième couche de résine acrylique dans cet ordre dans un moule ; et
le moulage d'une deuxième couche de résine acrylique en injectant une composition de résine (2) contenant une résine (méth)acrylique sur la troisième couche de résine acrylique du stratifié pour un moulage par injection disposé dans le moule,
dans lequel la résine (méth)acrylique présente une température de ramollissement Vicat de 115 °C ou plus et de 145 °C ou moins, telle que mesurée à l'aide d'un procédé décrit dans la description, soit

b) une première couche de résine acrylique formée à partir d'une composition de résine (1) contenant une résine (méth)acrylique, une couche de résine thermoplastique formée à partir d'une composition de résine contenant une résine thermoplastique, et une deuxième couche de résine acrylique formée à partir d'une composition de résine (2) contenant une résine (méth)acrylique dans cet ordre, le procédé comprenant :

l'évacuation, depuis une filière, d'un stratifié en résine fondue contenant au moins une masse fondue de la composition de résine (1) contenant la résine (méth)acrylique, une masse fondue de la composition de résine contenant la résine thermoplastique et une masse fondue de la composition de résine (2) contenant la résine (méth)acrylique; et
le refroidissement du stratifié en résine fondue déchargé pour obtenir un stratifié,
dans lequel la résine (méth)acrylique contenue dans la composition de résine (2) présente une température de ramollissement Vicat de 115 °C ou plus et de 145 °C ou moins, telle que mesurée à l'aide d'un procédé

décrit dans la description.

**10.** Procédé de fabrication selon la revendication 9, dans lequel la couche de résine thermoplastique contient 71 % ou plus d'un composant présentant un temps de relaxation transversale $T_2^H$ lors d'une mesure RMN impulsionnelle de 0,03 ms ou plus, tel que mesuré à l'aide d'un procédé décrit dans la description.

FIG. 1

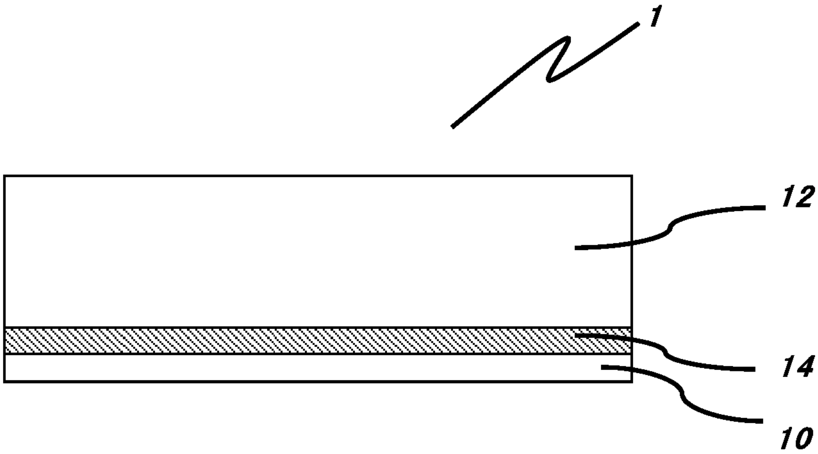


FIG. 2

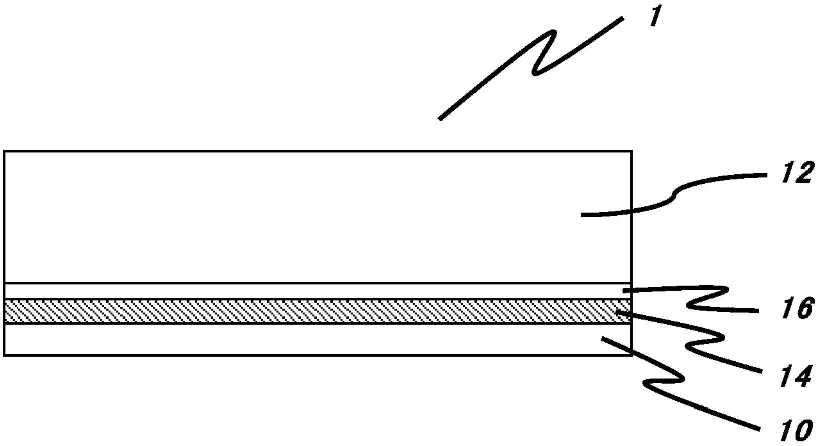

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003201409 A
- WO 2017208882 A


### Non-patent literature cited in the description


- **J.G. POWLES ; J.H. STRANGE.** *Proc. Phys. Soc.,* 1963, vol. 82, 6-15